Europäisches Patentamt

European Patent Office

Office européen des brevets

(19)

(11) Numéro de publication: **0 112 208 B1**

(12) **FASCICULE DE BREVET EUROPEEN**

(45) Date de publication du fascicule du brevet:
16.09.87

(51) Int. Cl.⁴: **G 06 F 13/36**, G 06 F 13/22

(21) Numéro de dépôt: **83402228.7**

(22) Date de dépôt: **18.11.83**

(54) Interface de gestion d'échanges d'informations sur un bus de communication entre au moins une unité de contrôle et des unités périphériques ou entre ces unités périphériques.

(30) Priorité: **25.11.82 FR 8219780**

(43) Date de publication de la demande:
**27.06.84 Bulletin 84/26**

(45) Mention de la délivrance du brevet:
**16.09.87 Bulletin 87/38**

(84) Etats contractants désignés:
**DE GB NL**

(56) Documents cités:
**BE - A - 693 694
FR - A - 2 232 007
FR - A - 2 365 250
GB - A - 904 334
US - A - 3 876 868**

**PATENTS ABSTRACTS OF JAPAN, vol.6, no.77, 14 mai 1982, page E-106955**

(73) Titulaire: **CENTRE NATIONAL DE LA RECHERCHE SCIENTIFIQUE (CNRS), 13 Quai Anatole France, F-75700 Paris (FR)**

(72) Inventeur: **Chevalet, Jean, 42, Boulevard de Latour Maubourg, F-75008 Paris (FR)**
Inventeur: **Reeves, Robert, 3, rue de la Rotonde Voisins le Bretonneux, F-78180 Montigny le Bretonneux (FR)**

(74) Mandataire: **Mongrédien, André et al, c/o BREVATOME 25, rue de Ponthieu, F-75008 Paris (FR)**

## Description

La présente invention concerne une interface de gestion d'échanges d'informations sur un bus de communication entre au moins une unité de contrôle et des unités périphériques, ou entre ces unités périphériques.

L'invention s'applique à la communication d'informations entre une unité de contrôle ou de traitement et des unités périphériques, ou entre ces unités périphériques, en temps réel, par l'intermédiaire d'un bus d'échanges d'informations.

Il existe différents niveaux de temps réel:

- le temps réel de l'utilisateur ou temps vrai extérieur qui est lié au déroulement d'un processus à contrôler et/ou mesurer,
- le temps réel des informations qui résulte de «simples» calculs; il est lié au déroulement d'un programme, et donc aux structures matérielles des ordinateurs; il présente des imprécisions inhérentes;
- le temps réel qui intervient dans les interfaces, synchrone avec le processus extérieur et asynchrone avec l'ordinateur. Ce temps réel doit rendre l'interface transparente vis-à-vis des actions de l'ordinateur.

Les différences entre ces trois notions de temps réel sont d'autant plus marquées que l'échelle de temps nécessaire est courte (tous les problèmes s'aggravent pour une précision meilleure que la milliseconde).

L'invention s'applique plus particulièrement à la communication de données numériques entre une unité de contrôle et des unités périphériques, par l'intermédiaire d'un bus, ces unités périphériques étant constituées par exemple, par des appareils de mesure ou de contrôle de processus expérimentaux ou industriels.

On sait que les interfaces d'échanges d'informations sur un bus de communication entre une unité de contrôle et des unités périphériques constituées d'appareils de mesure par exemple, ou entre ces unités périphériques, sont très nombreuses. En fait, chaque constructeur d'appareils périphériques ou d'appareils de mesure, fournit une interface qui permet à cet appareil de mesure d'être connecté à un bus de communication pour échanger des informations avec une unité de contrôle, ou avec d'autres unités périphériques. Avec ces interfaces, il est difficile d'opérer le choix d'un matériel performant, présentant une complexité de fonctionnement et de programmation raisonnables, et d'un coût abordable.

Généralement, les interfaces de gestion d'échanges d'informations sur un bus de communication entre une unité de contrôle et des unités périphériques, nécessitent l'utilisation d'un mini- ou d'un micro-ordinateur, permettant de gérer ces échanges, par l'intermédiaire de circuits logiques de connexion avec le bus de communication; généralement, les structures des matériels et logiciels utilisés sont très variées et chaque constructeur crée ou modifie l'interface et les langages de gestion en fonction des applications qu'il souhaite mettre en œuvre. L'utilisation de langages de hauts niveaux classiques (tel que le Fortran) est exceptionnelle et beaucoup d'interfaces se rapprochent en fait d'automates programmables en assembleur, qui sont difficilement modifiables pour être adaptés à d'autres applications que celles prévues au départ.

Le traitement des données en provenance d'une unité périphérique telle qu'un appareil de mesure par exemple n'est jamais réalisé en temps réel lorsque plusieurs unités périphériques sont reliées au même bus de communication, s'il n'est pas prévu de dispositif de synchronisation externe.

Les interfaces existantes sont donc la plupart du temps spécifiques, peu satifaisantes pour gérer des résultats numériques de mesure par exemple, en temps réel; elles sont difficilement adaptables à un faible coût.

On peut classer les interfaces connues en trois catégories:

- les interfaces orientées vers une application scientifique (laboratoires d'analyses, de recherches, etc.)
- les intefaces modulaires permettant de relier des unités périphériques à un bus spécialisé;
- les interfaces utilisant le bus d'une unité centrale de traitement.

Les interfaces de la première catégorie permettent d'automatiser le fonctionnement d'un appareil de mesure tel qu'un spectrographe, un appareil de mesure électrochimique, un appareil de traitement du signal, etc.

Toutes ces interfaces sont très spécifiques et elles présentent des fonctions qui sont très étroitement définies par le fabricant. Toute modification ou toute adaptation à une application même légèrement différente, est difficile, voire même impossible. Généralement, le processeur qui gère les échanges d'informations à travers cette interface, n'est pas utilisable indépendamment. Cette interface peut présenter de bonnes performances pour une application particulière mais, comme on vient de le voir, peu de souplesse.

Parmi les interfaces de cette première catégorie, on rencontre aussi les automates programmables. Ces automates sont encore plus orientés vers certains contrôles en milieu industriel, ou totalement affectés à une tâche particulière. Ils sont aussi très difficilement modifiables, peu adaptables aux appareils de mesure d'un laboratoire de recherche et souvent inutilisables en temps réel.

Les interfaces de la deuxième catégorie qui sont modulaires et qui permettent des échanges de données sur un bus spécialisé, sont en fait une simple liaison de communication entre divers points. Ces interfaces peuvent être par exemple, celles qui sont définies dans la norme IEEE 488. Elles permettent en fait des communications d'informations, en parallèle, entre deux unités autonomes d'instrumentation. Ces interfaces interviennent généralement dans un système nodal dans lequel toute communication transite par un contrôleur maître. La vitesse des transferts des données est assez limitée, bien que la programmation de ces transferts puisse être effectuée à partir de langages évolués.

Dans les normes qui définissent les interfaces de la deuxième catégorie, le problème de la synchronisation en temps réel n'est pas résolu. Toute modification de l'interface est irréalisable si elle n'est pas prévue par le constructeur. Ces interfaces sont très difficiles à implanter sur des matériels pour lesquels elles ne sont pas prévues, parce qu'elles sont définies par une norme.

Il résulte de ces observations que les interfaces de la deuxième catégorie sont très onéreuses, peu adaptées au milieu industriel et très restrictives pour leur usage en laboratoire. En fait, l'interface définie par la norme IEEE 488 n'est qu'un système d'interconnexion d'instruments classiques, avec un ordinateur contrôleur, surtout adapté aux transferts de blocs importants de données.

Un autre exemple d'interface de cette catégorie est défini dans la norme CAMAC de conception très ancienne; elle présente une structure modulaire typique mais nodale, et un adressage excessivement arborescent. Le logiciel qui permet de la gérer est très lourd et nécessite un matériel informatique important; la vitesse de fonctionnement est très moyenne; il n'est possible de synchroniser cette interface en temps réel que de manière externe. La gestion des interruptions et des priorités est très complexe et il en résulte que cette interface est très coûteuse, peu utilisée dans les laboratoires et dans l'industrie bien qu'efficace pour les transferts ponctuels.

Les interfaces de la troisième catégorie, qui utilisent un bus relié à un processeur-maître, sont des systèmes modulaires qui peuvent être connectés sur le bus d'un micro ou d'un mini-ordinateur.

Les interfaces de cette troisième catégorie sont limitées quant aux posibilités de modification et/ou d'extension. Leur programmation est très spécifique de chaque fabricant et pour chaque application particulière, et il est impossible de les utiliser en temps réel sans intervention profonde sur la structure logicielle ou matérielle prévue par le fabricant.

Dans cette troisième catégorie, on trouve aussi des interfaces de type modulaire basées sur des «bus» spécifiques (S100 par exemple) qui les rendent incompatibles entre elles. Leur contrôle est réalisé à partir d'un microprocesseur et leur programmation est souvent faite en assembleur. Il est difficile, voire impossible de les adapter au temps réel synchrone.

Des interfaces des types mentionnées ci-dessus sont décrits notamment dans les documents:

– «Patents abstracts of Japan» – volume 6 – no 77, 14 Mai 1982 – page E – 106 955
– «FR-A 2 232 007 (SIEMENS)»

L'invention telle que revendiquée a pour but de remédier à ces inconvénients et notamment de réaliser une interface de gestion des échanges d'informations sur un bus de communication, entre des unités centrales de traitement et des unités périphériques, ou entre ces unités périphériques; cette interface est totalement synchrone; elle fonctionne en temps réel vrai, indépendamment de l'asynchronisme de l'unité centrale de traitement. Cette interface gère en fait des échanges de données sur le bus, de manière synchrone et asynchrone, avec une précision connue; elle peut être simplement adaptée à tout type d'unité centrale. Ses applications ne sont pas spécifiques et elle peut être programmée en tout langage (haut niveau en particulier, interactif, etc.). Sa structure modulaire facilite sa construction ainsi que les dépannages et modifications éventuelles. Cette structure modulaire est évolutive et permet un adressage simple des unités périphériques, avec une sécurité absolue. Les communications internes de cette interface ne nécessitent pas l'intervention de l'unité centrale maître, et les opérations qu'elle effectue sont indépendantes de cette unité centrale. Elle peut permettre la connexion de plusieurs unités centrales travaillant en temps réel, avec un même appareil de mesure par exemple; enfin, elle permet un contrôle et une acquisition très rapide de données, par l'intermédiaire de mémoires tampons locales.

L'invention a pour objet une interface de gestion d'échanges d'informations sur un bus B de communication entre au moins une unité de contrôle et des unités périphériques, ou entre ces unités périphériques repérées par des adresses, ces informations contenant des données émises par l'unité de contrôle ou au moins l'une des unités périphériques dite unité émettrice, et contenant aussi une adresse de destination correspondant à l'unité centrale ou à l'unité périphérique dite unité réceptrice, par laquelle ces données doivent être reçues, comprenant respectivement pour l'unité de contrôle et pour chacune des unités périphériques, des moyens d'émission de données comportant des entrées qui sont respectivement reliées à des sorties de cette unité de contrôle et de ces unités périphériques, des sorties de ces moyens d'émission étant respectivement reliées au bus pour gérer l'émission de données vers l'unité possédant ladite adresse de destination, des moyens de réception de données comportant des entrées qui sont respectivement reliées au bus B, des sorties de ces moyens de réception étant respectivement reliées à des entrées de l'unité de contrôle et des unités périphériques, pour gérer la réception des données respectivement par l'unité de contrôle ou par l'unité périphérique possédant ladite adresse de destination, et des moyens de gestion reliés aux moyens d'émission, aux moyens de réception et au bus B pour gérer l'adressage des diverses unités au cours des échanges, pour autoriser une émission de données sur le bus, vers ladite unité d'adresse de destination et pour gérer la réception des données par cette unité, les priorités d'accès au bus pour les diverses unités pouvant être variables et programmables en temps réel, toute unité pouvant échanger des informations avec toute autre unité, sans nécessiter l'intervention de l'unité de contrôle, les moyens de gestion comprennent des moyens de balayage pour appliquer sur le bus B des signaux de balayage des adresses des unités susceptibles d'émettre des données sur le bus, et, pour chacune des unités, des moyens de comparaison d'adresses de balayage reliés aux moyens de balayage et respectivement aux moyens d'émission pour comparer l'adresse en cours de balayage avec l'adresse de l'unité ayant des donnés à émettre vers une unité réceptrice d'adresse prédéterminée, ces moyens de comparaison d'adresse de balayage fournissant au moyen d'émission correspondant à l'unité émettrice, un signal LEN d'autorisation de données vers le bus, pendant un intervalle de temps correspondant à la détection effective de cette égalité, ce signal LEN d'autorisation générant sur le bus un signal LDAV d'indication de présence de données sur le bus, et des moyens de comparaison d'adresses de destination reliés au bus B et respectivement, aux moyens de réception, pour comparer l'adresse de destination des données émises sur le bus, avec l'adresse de chaque unité, et pour fournir sur le bus un signal LDACC d'acceptation de réception de données par l'unité d'adresse de destination lorsqu'une égalité est détectée entre l'adresse de destination des données émises et l'adresse de l'unité réceptrice présentant ladite adresse de destination caractérisée en ce que les moyens de balayage des adresses sont des moyens appliquant en permanence des signaux de balayage sur le bus, les adresses de destination étant appliquées uniquement aux moyens de comparaison d'adresses de destination des unités réceptrices, les registres de réception d'adresses de ces unités réceptrices recevant à la place de ces adresses de destination, les adresses de balayage qui sont, pour un transfert donné, l'adresse de la source émettrice de données.

Selon une autre caractéristique, les moyens d'émission de chaque unité émettrice ou réceptrice comportent un registre-tampon d'émission d'adresse de destination de données, ce registre tampon d'émission d'adresse de destination comprenant des entrées qui sont reliées à des sorties d'adresse de l'unité émettrice pour enregistrer l'adresse de destination de l'unité réceptrice, des sorties de ce registre d'adresses étant reliées au bus B, un registre-tampon d'émission de données à émettre vers l'unité réceptrice, des entrées de ce registre d'émission de données étant reliées à des sorties de données de l'unité émettrice, des sorties de ce registre-tampon d'émission étant reliées au bus B, le signal LEN d'autorisation d'émission de données sur le bus B étant fourni aux registres tampon d'émission d'adresses et de données, cette émission étant effective lorsque les moyens de comparaison d'adresse de destination de l'unité réceptrice fournissent ledit signal LDACC d'acceptation de réception de données.

Selon une autre caractéristique, le moyen de réception de chaque unité comprend un registre tampon de réception des données provenant d'une autre unité émettrice, ce registre tampon de réception de données comprenant des entrées qui sont reliées au bus B pour recevoir des données, des sorties de ce registre tampon de réception de données étant reliées à des entrées de données de l'unité réceptrice qui lui correspond, un registre tampon de réception d'adresse comprenant des entrées qui sont reliées au bus B et aux moyens de balayage pour recevoir l'adresse de l'unité émettrice de ces données, et des entrées qui sont reliées au bus B pour recevoir des informations supplémentaires d'adressage destinées au récepteur et issues de l'émetteur, des sorties de ce registre de réception d'adresse étant reliées à des entrées de l'unité réceptrice, le signal LDACC d'acceptation de réception de données étant fourni par les moyens de comparaison d'adresse de réception, lorsque les moyens de comparaison d'adresse de l'unité émettrice ont fourni le signal LDAV d'autorisation d'émission de données.

Selon une autre caractéristique, l'interface comprend en outre pour chaque unité, des moyens logiques de gestion d'émission reliés à l'unité émettrice correspondante, ces moyens fournissant un signal TLOAD appliqué aux registres tampons de l'unité émettrice, et un signal TDAV appliqué sur une entrée des moyens de comparaison d'émission, et des moyens logiques de gestion de réception, reliés à l'unité réceptrice correspondante, ces moyens fournissant un signal RDY appliqué sur une entrée des moyens de comparaison de réception si l'unité réceptrice correspondante est prête à recevoir des données, les moyens de comparaison de réception étant autorisés par ce signal RDY, en cas d'égalité avec l'adresse de destination, à répondre au signal d'autorisation LDAV, en effectuant d'une part, le chargement des registres de réception et, d'autre part, en générant le signal LDACC d'acceptation sur le bus, et en signalant la réception des données aux moyens de gestion de réception, qui eux-mêmes répondent en changeant l'état logique du signal RDY, ce signal bloquant immédiatement les moyens de réception et validant les sorties des registres de réception, par un signal de validation ETR, le signal d'acceptation LDACC ainsi généré sur le bus étant appliqué aux moyens de gestion d'émission pour les remettre dans leur état initial indiquant à l'unité émettrice l'acceptation par l'unité réceptrice du transfert en cours.

Selon une autre caractéristique, les moyens de comparaison d'adresse d'émission comprennent, pour chaque unité, un comparateur d'adresse relié au bus B, pour recevoir des moyens de balayage, les signaux de balayage d'adresse, ce comparateur étant aussi relié à l'unité susceptible d'émettre des données, pour comparer l'adresse de cette unité avec les adresses balayées, et une bascule d'émission de type D, reliée à une sortie du comparateur d'émission ainsi qu'à une sortie des moyens logiques de gestion d'émission fournissant le signal TDAV, une sortie de cette bascule fournissant au bus B le signal LEN d'autorisation d'émission et le signal LDAV d'indication de présence de données lorsqu'il y a détection d'égalité entre l'adresse de l'unité émettrice, et l'une des adresses balayées par les moyens de balayage, cette bascule d'émission se trouvant remise automatiquement en état de non émission à la fin de l'égalité d'adresse balayée à la sortie du comparateur d'adresse.

Selon une autre caractéristique, les moyens de comparaison d'adresse de réception de chaque unité comprennent un comparateur de réception relié au bus B, pour recevoir l'adresse de destination des données, ce comparateur étant aussi relié à l'unité réceptrice correspondante pour recevoir l'adresse de cette unité, et une bascule de réception de type D reliée à une sortie du comparateur, à une sortie des moyens logiques de gestion de réception correspondant à cette unité réceptrice, cette bascule étant aussi reliée au bus B, pour recevoir le signal LDAV d'autorisation d'émission de données sur le bus, une sortie de cette bascule fournissant au registre de réception de données le signal RDAV d'autorisation de réception de données par ce registre, lorsque le comparateur de réception détecte une égalité entre l'adresse de l'unité réceptrice correspondante et l'adresse de destination des données fournie par le bus, lorsque la bascule a reçu le signal LDAV d'autorisation d'émission de données, et lorsque les moyens logiques de gestion ont reçu le signal d'autorisation de réception RDAV et ont fourni à la bascule de réception un signal RDY indiquant que l'unité réceptice est alors prête à recevoir les données, ce signal RDY étant impérativement nécessaire pour la mise en compte du signal LDAV, cette bascule de réception se trouvant remise en état de non réception par la fin de l'égalité de l'adresse de destination avec l'adresse de l'unité réceptrice, en sortie du comparateur de réception.

Selon une autre caractéristique, les moyens de balayage d'adresses sont des moyens non reprogrammables qui balayent la totalité ou une partie des adresses des unités, dans un ordre prédéterminé.

Selon une autre caractéristique, les moyens de balayage d'adresses sont des moyens programmables, le nombre d'adresses balayées pouvant être programmées et reprogrammées en temps réel.

Selon une autre caractéristique, les moyens de balayage des adresses et de leur niveau de priorité sont redéclenchés par un signal d'interruption IRQ.

Selon une autre caractéristique, les moyens de balayage sont programmables pour balayer les adresses les plus prioritaires, selon des valeurs d'adresses prédéterminées ou selon des séquences déterminées de succession de ces adresses de priorité maximale, les valeurs de ces adresses pouvant être indépendamment reprogrammées en temps réel, ces moyens étant redéclenchés par un signal d'interruption IRQ.

Selon une autre caractéristique, les lignes du bus sont des lignes électriques de transmission.

Selon une autre caractéristique, les lignes du bus sont des lignes optiques reliées à des moyens optoélectroniques.

Les caractéristiques et avantages de l'invention ressortiront mieux de la description qui va suivre, donnée en référence aux dessins annexés dans lesquels:

la fig. 1 représente schématiquement une interface conforme à l'invention, permettant de gérer des échanges d'informations sur un bus de communication entre une unité centrale de traitement et des unités périphériques, ou entre ces unités périphériques;

les fig. 2a et 2b représentent schématiquement les moyens d'émission et de réception ainsi que certains des moyens de gestion de priorité appartenant à cette interface;

la fig. 3a est un chronogramme correspondant au balayage des adresses des unités,

la fig. 3b représente schématiquement un premier mode de réalisation des moyens qui permettent d'appliquer en permanence sur le bus, des signaux de balayage des niveaux de priorité des unités reliées au bus;

la fig. 4 est un chronogramme des signaux essentiels intervenant dans le dispositif de l'invention;

la fig. 5 représente schématiquement un second mode de réalisation des moyens permettant d'appliquer des signaux de balayage des niveaux d'adressage prioritaire sur le bus;

la fig. 6 représente schématiquement un troisième mode de réalisation des moyens qui permettent d'appliquer des signaux de balayage de niveaux d'adressage prioritaire sur le bus;

les fig. 7a et 7b représentent un mode de réalisation des moyens logiques de commande d'émission (7a) et de réception (7b) intervenant dans l'interface;

la fig. 8 représente l'autre mode de réalisation de ces moyens logiques de commande pour émission et réception;

la fig. 9 représente des moyens permettant d'appliquer des signaux de test à l'interface.

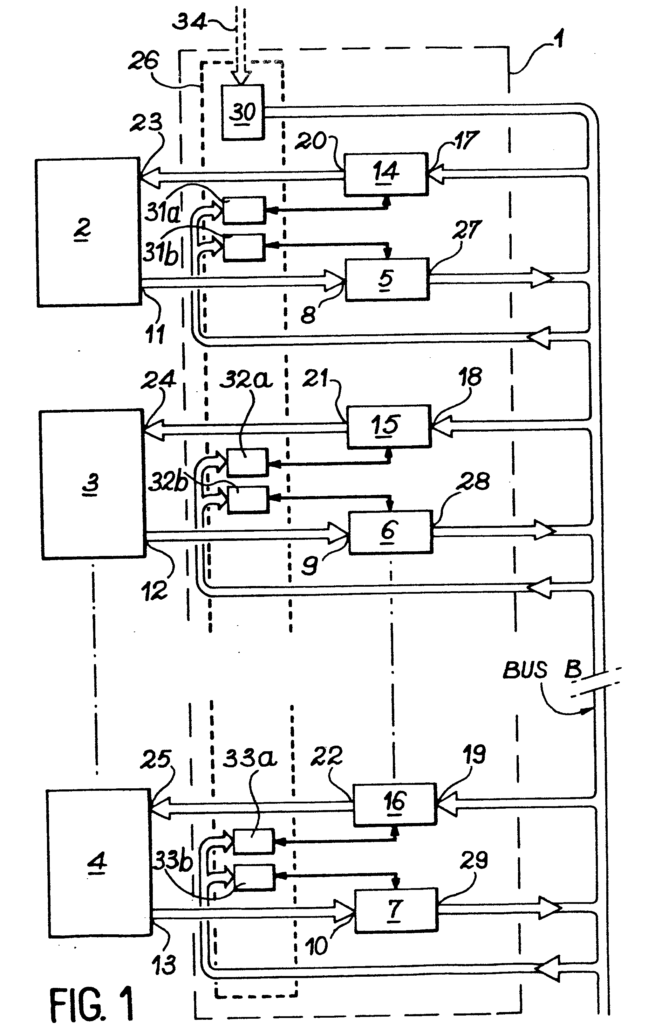

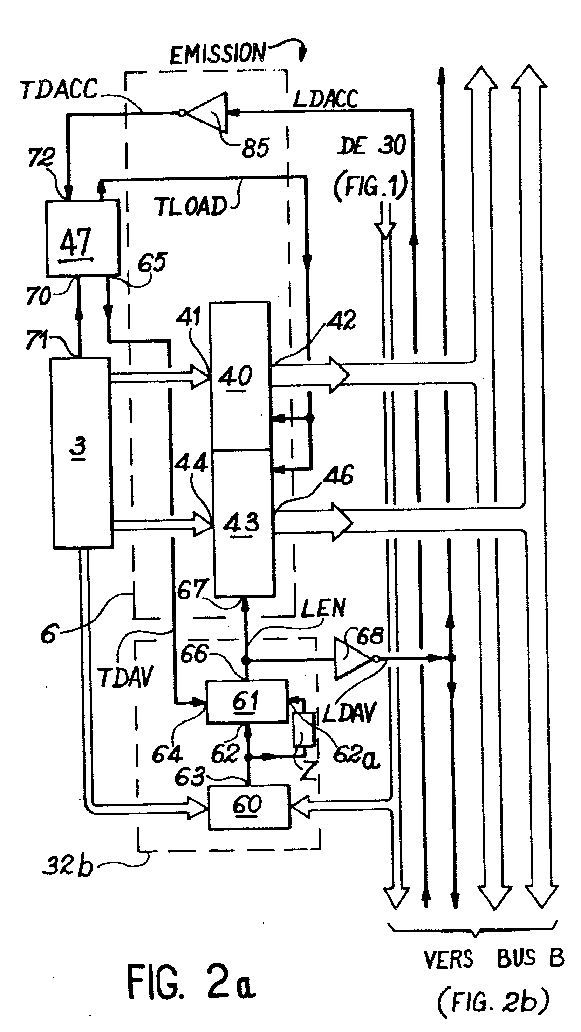

La fig. 1 représente schématiquement une interface 1 de gestion des échanges d'informations sur un bus de communication B, entre une unité centrale de contrôle 2 et des unités périphériques telles que 3, 4 ou entre ces unités périphériques repérées par des adresses, le nombre de ces unités a été limité à deux sur la figure, pour en simplifier la représentation, ce nombre peut évidemment être plus grand. Les informations contiennent des données émises sur le bus B, soit par l'unité centrale 2, soit par l'une des unités périphériques 3, 4 et elles contiennent aussi l'adresse de l'unité périphérique par laquelle les données doivent être reçues (adresse de destination), par l'intermédiaire du bus de communication.

L'interface 1 comprend respectivement pour l'unité centrale et pour chacune des unités périphériques, des moyens d'émission de données vers le bus B. Ces moyens d'émission sont représentés en 5, 6, 7 sur la figure; ils comportent respectivement des entrées 8, 9, 10 qui sont reliées respectivement à des sorties 11,12, 13, de l'unité centrale 2 et des unités périphériques 3, 4. Des sorties 27, 28, 29 de ces moyens d'émission de données sont respectivement reliées au bus pour gérer l'émission de données vers l'adresse de destination. Cette interface comprend aussi des moyens de réception 14, 15, 16, de données provenant du bus B; ces moyens de réception comportent respectivement des entrées 17, 18, 19 qui sont respectivement reliées au bus B et des sorties 20, 21, 22 qui sont respectivement reliées à des entrées 23, 24, 25 de l'unité centrale 2 et des unités périphériques 3, 4. Les moyens d'émission permettent de gérer la réception de données par l'unité centrale ou par l'une des unités périphériques, quand la reconnaissance d'adresse de destination est effective, comme on le verra plus loin. En fait, les liaisons d'émission et de réception peuvent être confondues sous forme d'une liaison bidirectionnelle à trois états. (Les liaisons 17, 27 et 23, 11 sont physiquement les mêmes lignes bidirectionnelles trois états.)

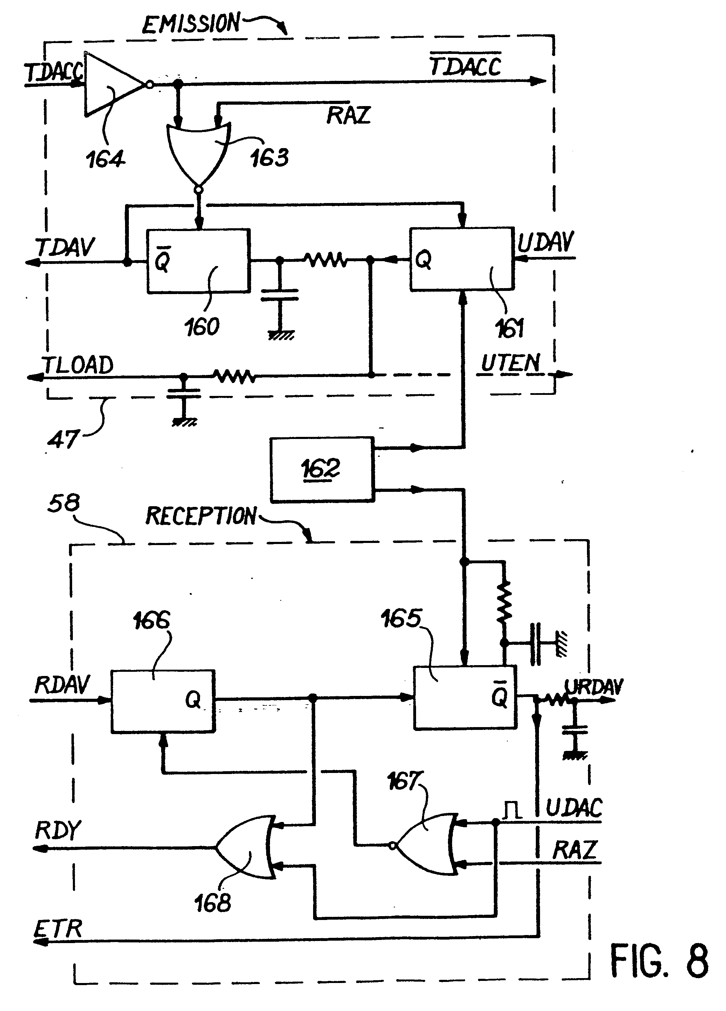

Les liaisons telles que 11, 8 et 20, 23 sont réalisées physiquement sur les mêmes lignes bidirectionnelles à trois états. Comme on le verra plus loin (fig. 8), la gestion correcte de ces lignes bidirectionnelles doit être effectuée sous le contrôle des unités émettrices ou réceptrices.

Enfin, cette interface comprend des moyens 26 de gestion, reliés aux moyens 5, 6, 7, d'émission de données, aux moyens de réception 14, 15, 16 et au bus B; ces moyens de gestion 26 permettent, comme on le verra plus loin en détail, de gérer les niveaux de priorité de l'unité centrale 2 et des unités périphériques 3, 4, pour autoriser une émission de données sur le bus, vers l'unité de destination, et pour gérer la réception des données par cette unité de destination. Les priorités sont fixes ou programmables (entrées de programmation 34) et sont attribuées en fonction des adresses de l'unité centrale et des unités périphériques.

On convient d'attribuer une adresse de 0 à 15 aux 16 unités, par exemple, reliées au bus.

On convient aussi d'attribuer la priorité maximale à l'unité d'adresse 0, puis par ordre décroissant, aux unités d'adresses suivantes.

Les moyens 26 de gestion comprennent des moyens 30 pour appliquer en permanence sur le bus B, des signaux de balayage des niveaux de priorité (ordre naturel croissant par exemple) correspondant respectivement aux adresses de l'unité centrale et des unités périphériques. Les moyens de gestion comprennent aussi, pour l'unité centrale 2, et pour chacune des unités périphériques des moyens 31b, 32b, 33b de comparaison de priorités reliés aux moyens d'émission, pour comparer le niveau de priorité d'une unité susceptible d'émettre des données, vers l'unité de destination, avec les niveaux de priorité successivement balayés grâce aux moyens 30. Les moyens 31b, 32b, 33b fournissent au moyen d'émission correspondant à l'unité susceptible d'émettre des données, un signal d'autorisation d'émission de données vers le bus, en cas de détection d'égalité entre le niveau balayé et le niveau de priorité de l'unité concernée; les moyens de gestion 26 comprennent aussi des moyens 31a, 32a, 33a de comparaison d'adresse, reliés respectivement aux moyens de réception 14, 15, 16 pour comparer l'adresse de destination des données présentes sur le bus, avec l'adresse de chaque unité (2, 3, 4). Ces moyens de comparaison d'adresses autorisent la réception des données par l'unité d'adresse prédéterminée lorsqu'une égalité est détectée entre l'adresse des données présente sur le bus et l'unité d'adresse de destination.

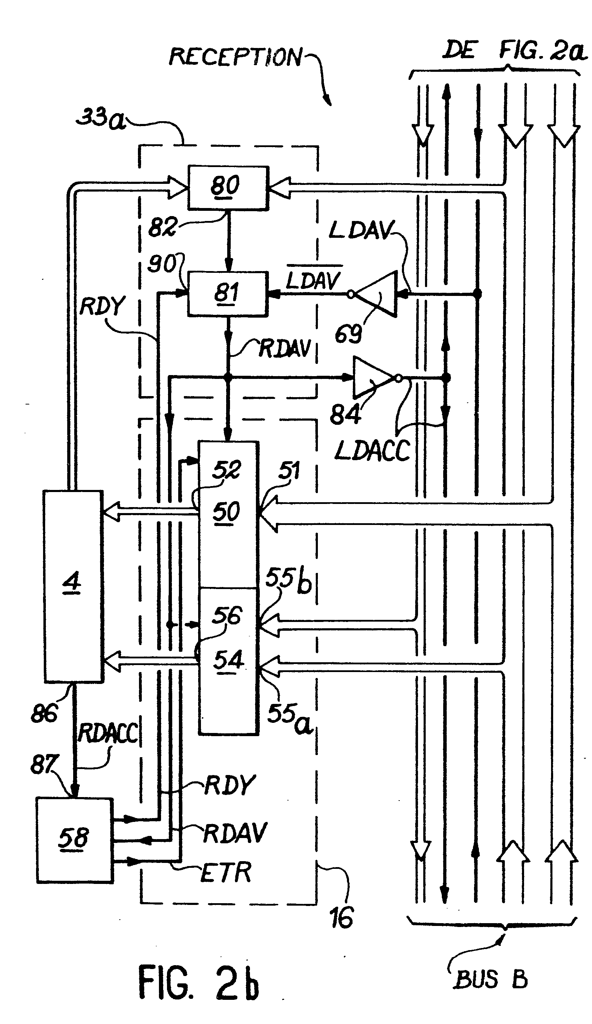

La fig. 2a représente schématiquement l'un des moyens d'émission 6 par exemple, de l'unité 3 et la fig. 2b représente l'un des moyens de réception 16, par exemple, de l'unité 4, mentionnés plus haut. Elles représentent aussi de manière schématique des moyens de comparaison 32b pour l'émission et 33a pour la réception appartenant aux moyens de gestion 26 (fig. 1) de ces unités. Il est bien évident que ces moyens d'émission et de réception ainsi que ces moyens de comparaison pour ces unités sont respectivement identiques à ceux des autres unités reliées au bus par l'interface.

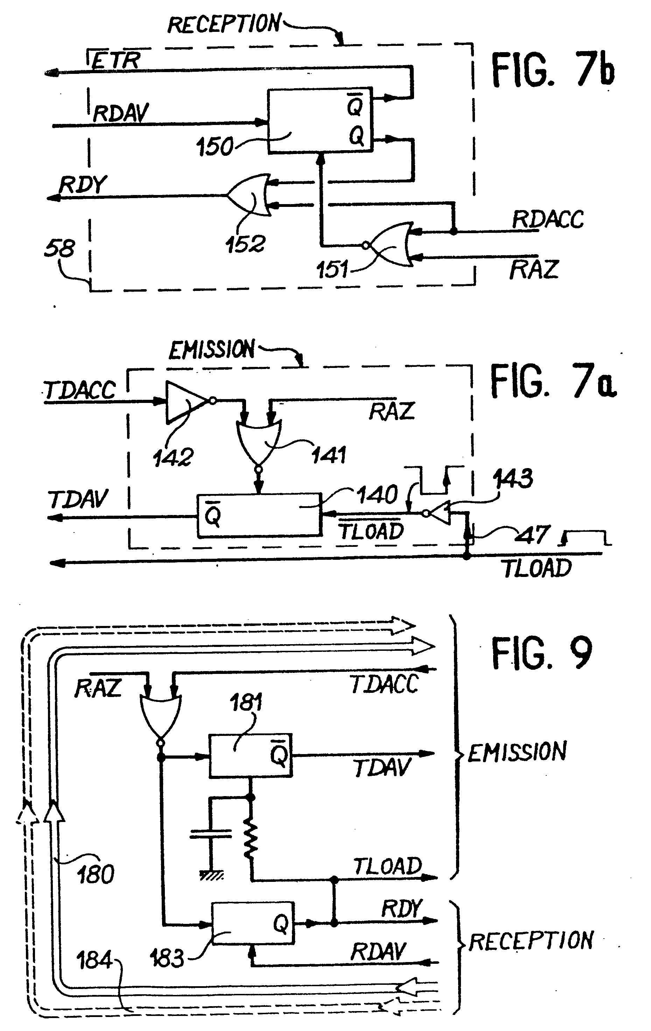

Les moyens d'émission 6 de l'unité 3 (qui sont identiques aux moyens 5, 7 des autres unités) susceptibles d'émettre des données vers une autre unité (l'unité 4 par exemple), comprennent un registre tampon 40 d'émission d'adresse de destination de données, et un registre tampon d'émission de données 43. Le registre tampon d'adresse de données 40 comprend des entrées 41 qui sont reliées à des sorties d'adresse de l'unité 3 susceptible d'émettre des données vers l'unité 4. Des sorties 42 de ce registre 40 sont reliées au bus B. Le registre tampon de données 43 comprend des entrées 44 qui sont reliées à des sorties de données de l'unité 3. Des sorties 46 du registre 43 sont reliées au bus B. Des moyens logiques 47 de gestion d'émission de l'unité 3 (voir explications fig. 7 et 8) sont reliés aux moyens d'émission 6. Ils permettent d'appliquer aux moyens de comparaison 33a correspondant à l'unité réceptrice 4, un signal LDAV. Ce signal indique en fait à toutes les unités réceptrices que l'unité émettrice 3 a émis des données sur le bus B. L'unité réceptrice 4 est la seule, après identification de l'adresse de destination, à fournir le signal LDACC d'acceptation de réception de données. Le signal LDACC est alors appliqué aux moyens de logique 47 de gestion d'émission. Les signaux LDAV et LDACC seront décrits plus loin en détail.

Les moyens de réception 16 de l'unité 4 susceptible de recevoir des données (qui sont identiques aux moyens de réception 14, 15 des autres unités) comprennent un registre tampon 50 de réception de données provenant du bus. Ce registre tampon comprend des entrées 51 qui sont reliées au bus B pour recevoir des données. Des sorties 52 de ce registre tampon de réception de données 50 sont reliées à des entrées de données de l'unité réceptrice 4. Les moyens de réception 16 comprennent aussi un registre tampon de réception d'adresse 54; ce registre comprend des entrées 55a qui sont reliées aux lignes d'adresses du bus B, et 55b qui sont reliées aux sorties des moyens 30 de balayage, contenant l'adresse de source de données. Des sorties 56 du registre d'adresse 54 sont reliées à des entrées de l'unité réceptrice 4. Les moyens de réception 16 sont liés à des moyens logiques 58 de gestion de réception de données de l'unité 4; ces moyens logiques 58 permettent d'autoriser la réception de données provenant du bus B, lorsque les moyens de comparaison d'adresse 33a fournissent le signal LDACC d'acceptation de réception de données et lorsque les moyens de comparaison de priorité 32b, correspondant à l'unité émettrice 3 fournissent un signal LEN d'autorisation d'émission de données.

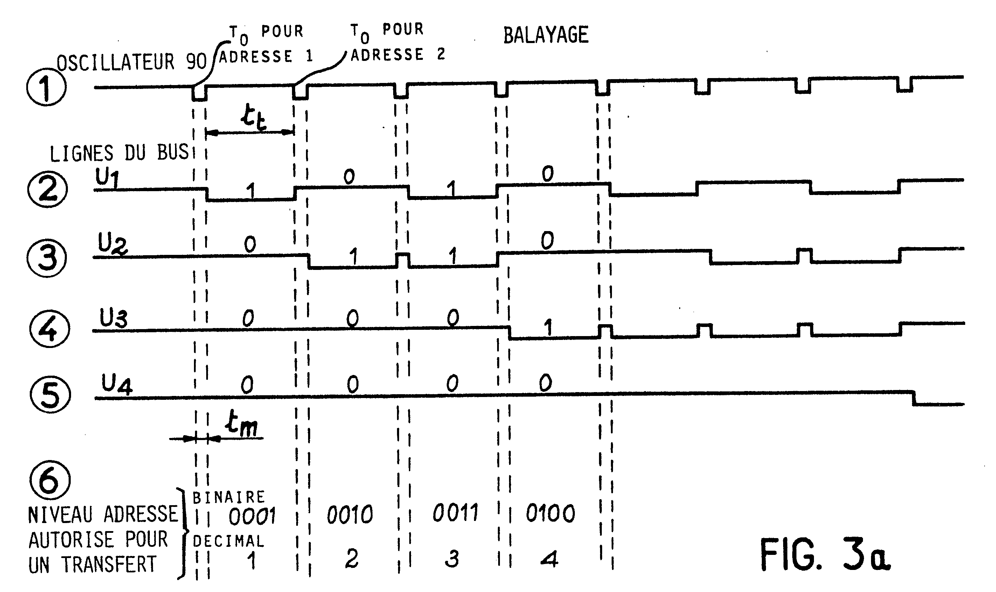

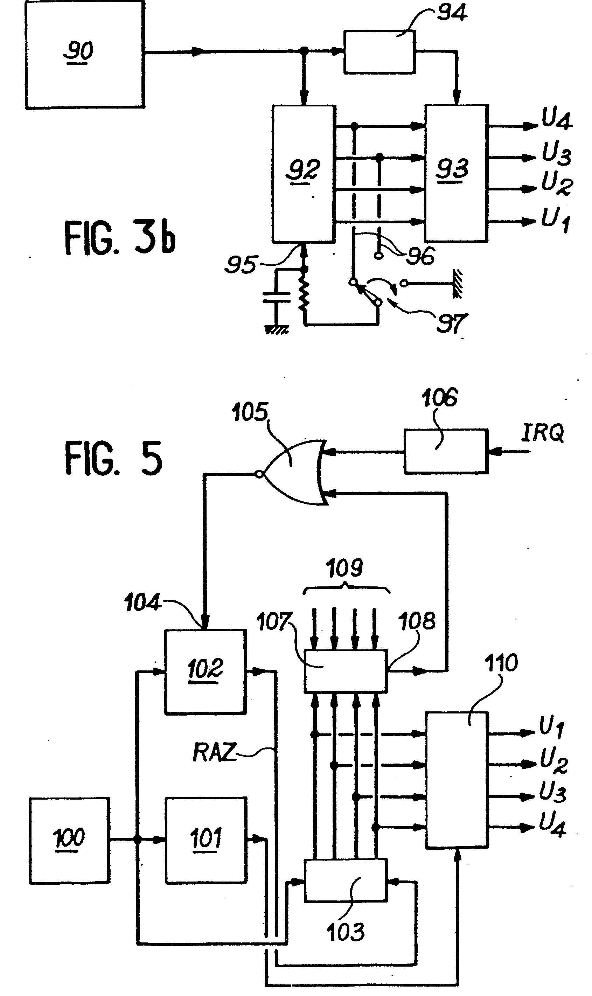

Les moyens de comparaison de priorité 31b, 32b, 33b, comprennent pour chaque unité, un comparateur logique d'émission 60, relié au bus B, pour recevoir les signaux de balayage de niveau de priorité provenant des moyens de balayage 30 (fig. 1). Ce comparateur est aussi relié à l'unité 3 susceptible d'émettre des données, pour comparer le niveau de priorité de cette unité avec chacun des niveaux balayés. Ces moyens de comparaison comprennent aussi une bascule d'emission 61, de type D, dont une entrée 62 est reliée à la sortie d'égalité 63 du comparateur 60. Cette bascule 61 fonctionne de la manière suivante: l'égalité d'adresses en 63, provoque le déblocage immédiat des fonctions de cette bascule, qui autrement est normalement bloquée, puis après un délai introduit par un circuit Z (minimum), provoque le front montant actif d'horloge (entrée 62a) qui va prendre en compte et transférer sur la sortie 66, l'état logique de l'entrée 64 (TDAV). La fin de ce cycle (reblocage) sera détaillée avec le chronogramme de la fig. 3. Cette bascule 61 possède également une entrée 64 qui est reliée à une sortie 65 des moyens logiques de gestion 47. Une sortie 66 de la bascule 61 est reliée à une entrée 67 de commande trois états des registres 40, 43 d'adresse et de données pour leur appliquer un signal LEN d'autorisation d'émission de données. En fait, et comme on le verra plus loin en détail, un signal LDAV est aussi appliqué aux moyens de comparaison 33a de l'unité réceptrice de données, par l'intermédiaire du bus B et par l'intermédiaire de deux amplificateurs 68, 69, intervenant pour des raisons technologiques. Lorsque ce signal est fourni aux moyens de comparaison 33a et lorsqu'il y a détection d'une égalité entre le niveau de priorité de l'unité émettrice 3, et l'un des niveaux de priorité balayé par les moyens de balayage 30, et aussi lorsque les moyens logiques de gestion 58 de l'unité réceptrice signalent la disponibilité (signal RDY) du registre de réception, le transfert de données s'effectue grâce au signal RDAV résultant de ces trois conditions. Ce même signal RDAV engendre le signal LDACC qui indique à l'émetteur le succès du transfert.

Le signal TDAV sur la sortie 65 des moyens logiques 47 indique la disponibilité des données contenues dans le registre d'émission de données 3. Un signal RDAV autorise la réception des données et des adresses par les registres de réception 50, 54. Ce signal est le résultat de l'action du signal LDAV et du signal RDY (disponibilité du récepteur) sur une bascule 81 des moyens 33a. Il est aussi appliqué à une entrée de commande des moyens logiques de gestion 58 de l'unité réceptrice 4, ainsi qu'à un amplificateur-inverseur 84 qui fournit à sa sortie le signal LDACC indiquant l'acceptation sur le bus de réception de données par l'unité réceptrice 4. Ce signal est appliqué à une entrée d'un amplificateur-inverseur 85 des moyens d'émission de l'unité émettrice 3, pour être transformé en un signal TDACC; ce signal commande, comme on le verra plus loin en détail, les moyens logiques de gestion 47 pour que ceux-ci indiquent aux moyens d'émission, la fin du transfert accomplie avec succès.

On distingue aussi sur les fig. 2a et 2b les signaux de gestion actionnés par les unités (3 et 4 dans l'exemple considéré). Ces signaux sont TLOAD, TDACC, TDAV, RDACC, RDY, RDAV, ETR. Le signal TLOAD qui est fourni par une sortie 71 de l'unité émettrice 3 est appliqué d'une part sur une entrée de gestion des moyens de gestion 47, et d'autre part sur une entrée de commande des registres 40, 43 pour que ceux-ci soient chargés par les données et l'adresse fournie par l'unité émettrice 3.

Le signal RDACC est fourni par une sortie 86 de l'unité de réception 4, et est appliqué à une entrée 87 des moyens de gestion de réception 58; ce signal indique à ces moyens logiques que l'unité de réception 4 a reçu ces données. Ce signal est transformé par les moyens de gestion 58, en un signal RDY qui est appliqué sur une entrée 90 de la bascule 81 des moyens de comparaison de réception 33a, pour indiquer que l'unité de réception 4 est prête à recevoir à nouveau des données.

Il est à remarquer que les liaisons entre les éléments des fig. 2a et 2b mettent en jeu des délais qui seront explicités plus loin.

Le transfert des données et des adresses sur bus est en fait réalisé comme suit: les lignes de données entre toute unité émettrice et toute unité réceptrice se correspondent de façon biunivoque. Les lignes des unités émettrices contenant les adresses de destination aboutissent seulement aux moyens de comparaison de réception. Par contre, les entrées des registres de réception correspondant à ces lignes sont reliées aux lignes de balayage d'adresse; ces lignes contiennent implicitement, pendant le temps de réception des données, l'adresse de l'unité émettrice, c'est-à-dire l'adresse de la source des données transmises.

Ainsi, la transmission inutile de la propre adresse de destination jusqu'à l'unité réceptrice elle-même, est remplacée par la transmission de l'adresse de source de ces données, assurant une identification totale et non ambiguë de tout transfert.

La fig. 3 est un chronogramme des signaux essentiels qui interviennent dans l'interface de l'invention. Ce chronogramme va permettre de mieux comprendre le fonctionnement de cette interface.

Lorsque l'une des unités, dite unité émettrice, telle que l'unité périphérique 3 par exemple, a des données à transmettre vers une autre unité périphérique, telle que l'unité 4 par exemple, le signal TLOAD est appliqué sur une entrée de commande des registres tampons d'émission d'adresse et de données 40, 43 (fig. 2), ainsi que sur l'entrée 70 des moyens logiques de gestion 47. Les registres 40 et 43 sont par exemple des registres tampons à trois états. Le signal TLOAD permet de faire retomber au niveau logique bas, le signal TDAV appliqué sur l'entrée 64 de la bascule 61, qui était à un niveau logique haut. Le signal TLOAD permet à la bascule D, 61, de fournir un signal LEN de niveau logique haut sur la sortie 66; un signal LDAV de niveau logique bas est alors généré sur la sortie de l'amplificateur-inverseur 68, lorsqu'il y a égalité entre le niveau de priorité de l'unité émettrice 3 et le niveau de priorité balayé par les moyens 30.

Les données et l'adresse qui avaient été enregistrées à la montée du signal TLOAD, dans les registres 40, 43, sont alors transmises sur le bus grâce au signal LEN. Ce signal indique à toutes les unités que des données et adresses de destination sont disponibles sur le bus. Le signal LDAV est appliqué sur une entrée de l'amplificateur-inverseur 69; la sortie de cet amplificateur applique donc le signal LDAV sur une entrée de la bascule D 81 des moyens de comparaison 33a de l'unité réceptrice 4.

Si, comme dans l'exemple considéré, c'est l'unité 4 qui est réceptrice des données, le comparateur d'adresse 80, détecte une égalité entre l'adresse de destination disponible sur le bus (provenant des registres 40 de l'unité émettrice) et l'adresse de cette unité 4. A la détection de cette égalité d'adresse, la bascule 81, de type D, qui a reçu le signal LDAV et qui reçoit également du comparateur 80 un signal de détection d'égalité, fournit en sortie un signal RDAV, si le signal RDY des moyens de gestion de réception 58, autorise la réception. Ce signal est appliqué au registre 50 pour enregistrer les données disponibles sur le bus. L'autorisation de transfert de données vers le registre 50 est fournie par la montée du signal RDAV. Ce signal est aussi appliqué sur une entrée de commande des moyens logiques 58, pour indiquer à ces moyens logiques que les données sont transférées dans le registre 50. Ces moyens logiques gèrent la lecture du registre 50 par le signal ETR.

Le signal RDAV qui autorise la réception des données par le registre 50 est également appliqué sur une entrée d'un amplificateur-inverseur 84 dont la sortie fournit le signal LDACC, indiquant aux moyens d'émission, l'acceptation de réception de données par le registre 50 des moyens de réception 16 de l'unité 4. Ce signal LDACC est appliqué grâce au bus B, sur une entrée de l'amplificateur-inverseur 85. La sortie de cet amplificateur applique sur une entrée 72 des moyens logiques de gestion 47 de l'unité émettrice 3, un signal TDACC qui indique cette acceptation de données par l'unité réceptrice 4. C'est la fin d'un transfert.

La fin de cycle de balayage de niveau de priorité par les moyens de balayage 30, remet à zéro la bascule 61 de type D appartenant aux moyens de comparaison 32b de l'unité émettrice 3. La fin de l'égalité d'adresses provoque le reblocage de la bascule 61 par son entrée 62. En conséquence, les sorties des registres à trois états 40, 43, d'émission de données et d'adresse sont alors placées dans le troisième état. En fait, la sortie 66 de la bascule 61 est une sortie Q de cette bascule. Le passage des sorties des registres 40, 43 dans le troisième état libère le bus B. Le signal LDACC passe à un niveau logique haut, puisque la validation des registres est terminée, entraînant la disparition de l'adresse de destination sur le bus, et donc la fin de l'égalité sur la sortie 82 du comparateur et donc le retour de la bascule 81. Les moyens logiques de gestion 47 de l'unité émettrice 3 détectent la fin du signal TDACC (passage au niveau logique haut) pour faire repasser au niveau logique haut le signal TDAV, indiquant ainsi la fin de la demande de transmission effectuée par l'unité émettrice 3.

Le signal RDAV qui était au niveau logique haut passe à un niveau logique haut, à la fin de la détection d'égalité de niveaux de priorités par le comparateur 60, et avant l'arrivée de l'adresse suivante.

La fig. 3a est un chronogramme correspondant au balayage des adresses des unités. La fig. 3b représente schématiquement un premier mode de réalisation des moyens qui permettent d'appliquer en permanence sur le bus des signaux de balayage des niveaux de priorité des unités reliées au bus. Dans ces figures, on voit une horloge ou oscillateur 90 qui fournit le signal représenté sur la ligne 1 de la fig. 3a. L'asymétrie du signal d'horloge est définie par deux temps $t_t$ et $t_m$ (temps mort essentiel). Cette horloge incrémente un compteur binaire 92 dont les sorties sont reliées aux lignes $U_1$, $U_2$, $U_3$, $U_4$ du bus (balayage) par l'intermédiaire d'un amplificateur tampon 93 à trois états validé par un circuit retard 94 qui permet la stabilisation et matérialise le temps $t_m$.

Sur la fig. 3a, les lignes 2, 3, 4, 5 représentent les états des sorties $U_1$ à $U_4$ de l'amplificateur 93. On voit aussi sur la ligne 6 de cette figure, les instants de validité d'adresse autorisant les transferts sur le bus pour le compte de l'adresse concernée. La ligne 6 représente en fait la chronologie des adresses (exprimées en binaire et en décimal) autorisées sur le bus en relation avec l'horloge 90 (ligne 1).

Dans ce premier mode de réalisation, les moyens 30 ne sont pas reprogrammables. Les niveaux d'adresse correspondant aux différentes unités sont balayés dans l'ordre qui correspond par exemple à l'ordre naturel de ces unités.

Dans ce mode de réalisation, les moyens de balayage ne sont pas déclenchés par un signal d'interruption provenant du bus mais les niveaux d'adresse sont balayés en permanence sur le bus B dans un ordre invariable et cyclique.

Dans le mode de réalisation de la fig. 3b, décrit ci-dessus, le balayage des adresses se fait normalement entre 0 et 15 ou dépend de la capacité de comptage du compteur binaire 92. La ligne de remise à zéro 95 peut être reliée par le commutateur 97 à l'une des lignes 96 ou à la masse (excursion maximum du balayage), ce qui provoque une remise à zéro prématurée du compteur lorsque l'une de ces lignes passe au niveau logique haut, réalisant ainsi un balayage limité et cyclique des adresses. La commande du commutateur 97 peut être effectuée par programmation en temps réel, à des fins d'optimisation des vitesses d'accès au bus.

En fait, le compteur 92 peut être par exemple un compteur de type 74 93. L'amplificateur 93 est de type 8T 95 ou 74 LS 365 par exemple. L'oscillateur comprend des moyens connus pour fournir le signal de la ligne 1 (fig. 3a) dans lequel les temps $t_t$, $t_m$ et $t_t + t_m$ sont ajustables, comme on le verra plus loin dans la description d'optimisation du système.

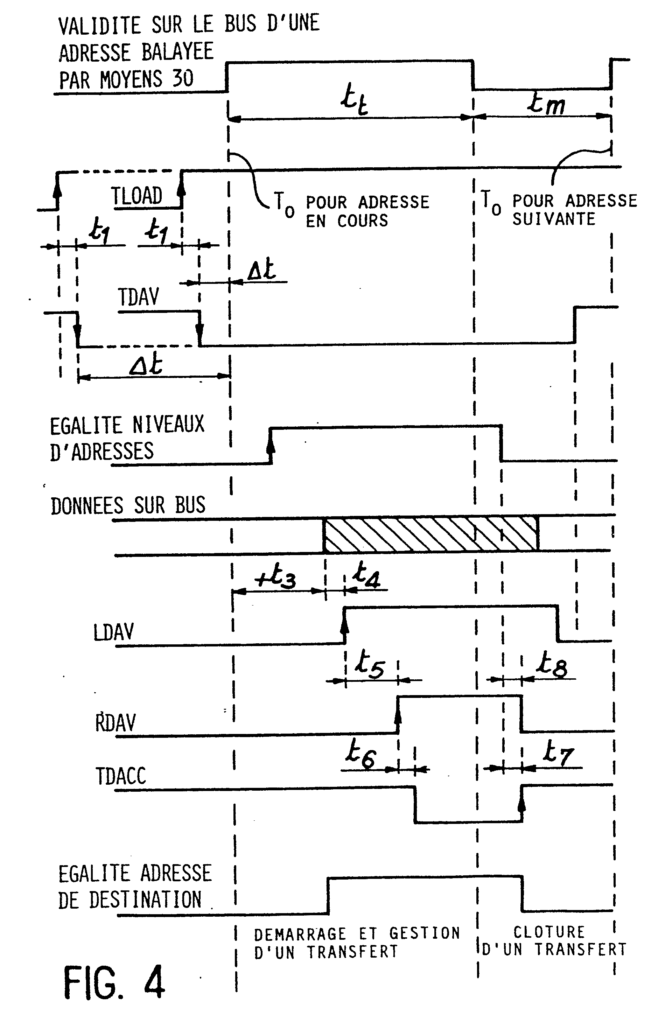

La fig. 4 représente des signaux intervenant dans l'enchaînement des événements survenant à partir d'une demande de transfert (TLOAD), issue d'une unité d'adresse donnée. Les signaux représentés sur cette figure interviennent sur une période $t_t + t_m$ (fig. 3a). Les délais $t_t$, $t_m$ et l'instant To ont déjà été décrits. Sur cette figure, le repérage des temps se fait à partir de To.

Le délai $\Delta t$ est un intervalle de temps arbitraire qui sépare une demande de transfert (TLOAD) et l'instant To de prise en compte de ce transfert par les moyens 30 de balayage d'adresse.

- $t_1$ ce délai correspond au temps d'établissement de portes, non représentées sur la fig. 2, qui donnent accès au bus B;
- $t_2 + t_3$ le délai $t_2$ correspond au temps de mise en état de la bascule 61 des moyens de comparaison 32B, auquel s'ajoute le délai $t_3$ d'accès des données au bus B;
- $t_4$ ce délai est un délai de sécurité qui est ajouté au signal LDAV; il permet de prévenir les moyens de comparaison 33a de l'unité réceptrice 4, que des données sont transférées sur le bus;
- $t_5$ ce délai correspond à la mise en état de la bascule 81 des moyens de comparaison 33a de l'unité réceptrice 4;
- $t_6$ est un délai de transmission du signal TDACC au moyen logique de gestion 47, de l'unité émettrice 3.
- $t_7$ est un délai qui est nécessaire à la remise dans le troisième état des registres d'émission de données vers le bus;
- $t_8$ est un délai intervenant dans la retombée du signal RDAV d'autorisation de réception de données par le registre 50 des moyens d'émission 16 de l'unité réceptrice 4.

En fait, ces délais sont soit des délais rendus nécessaire par la technologie des composants utilisés, soit des délais destinés à assurer la transmission de donnés entre une unité émettrice 3 et une unité réceptrice 4, dans les meilleures conditions de sécurité possibles (inhérentes au transfert).

Les bascules 61, 81 de type D, appartenant aux moyens de comparaison d'émission et de réception sont des bascules de la série 74 LS, tandis que les comparateurs 60, 81 sont de la série 74 S 85.

Avec les composants cités, l'interface représentée sur la fig. 2 permet de communiquer des données avec un débit de 200 à 250 Mégabauds.

Avec des composants homogènes de type 74 S cette vitesse de transmission peut être portée à ~ 400/450 MBaud. L'utilisation des dernières technologies TTL telles que 74 F (Fairchild) ou Texas (AS, ALS) doit permettre d'atteindre un temps de transfert $t_t + t_m$ de 30 ns donc une vitesse de transfert sur le bus de l'ordre du Giga Baud ($10^9$ bits/S). Cette vitesse semble être la limite du système compte tenu des caractéristiques électriques connues d'un bus trois états (essentiellement problèmes capacitifs).

La vitesse des moyens de balayage peut être optimisée très simplement (délais $t_t + t_m$ ajustables). On recherche par ajustement les valeurs de ces délais, tel qu'à l'aide d'un programme simple de gestion des transferts de données à travers l'ensemble des unités du système, on puisse tester les valeurs des délais ($t_t + t_m$) en-dessous desquelles les erreurs apparaissent brusquement. En fonctionnement normal, la fréquence des erreurs est négligeable.

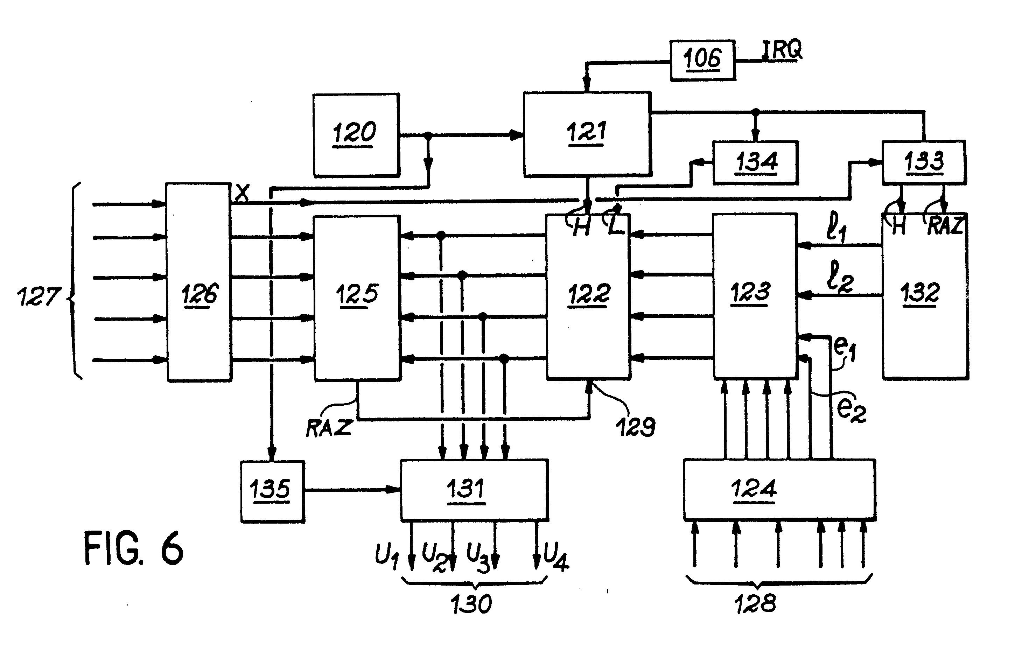

La fig. 5 représente schématiquement un autre mode de réalisation des moyens 30 (fig. 1) permettant d'appliquer des signaux de balayage avec priorité d'adresses sur le bus B. Dans ce mode de réalisation, les moyens de balayage sont semblables à ceux du premier mode de réalisation, mais peuvent être aussi déclenchés à partir d'une interruption IRQ provenant du bus B, et résultant par exemple d'une demande d'accès au bus fournie par l'une des unités 2, 3 ou 4. Cette interruption IRQ fait repartir le balayage depuis l'adresse la plus prioritaire.

Dans ce mode de réalisation, les moyens de balayage d'adresse comprennent un oscillateur ou horloge 100 dont une sortie est reliée, d'une part à une bascule monostable 101, et d'autre part, à un circuit 102 de synchronisation et de remise à zéro automatique (signal RAZ) d'un compteur 103 recevant les impulsions de l'oscillateur 100. Ce circuit de synchronisation et de remise à zéro automatique peut être constitué par exemple, de manière connue, par des bascules de type D qui ne sont pas représentées sur cette figure. Ce circuit reçoit sur une entrée 104 des impulsions de sortie d'une porte NON-OU 105 à deux entrées; l'une des entrées de cette porte NON-OU reçoit des impulsions provenant d'un circuit dérivateur 106; une entrée de ce circuit 106 reçoit un signal d'interruption IRQ émis sous la responsabilité d'une unité émettrice demandeuse. Ce signal est une impulsion courte. Une autre entrée de la porte NON-OU 105 est reliée à une sortie 108 d'un comparateur 107.

Lorsque le compteur 103 présente à ses sorties la valeur binaire N préalablement chargée sur les entrées 109 du comparateur 107 (N compris entre 1 et 15 par exemple), l'égalité apparaît sur la sortie 108 et est transmise au compteur 103 par la porte «NON-OU» 105 et le circuit de synchronisation 102 (signal RAZ). Le compteur est remis à zéro et recommence la séquence de balayage d'adresse. De même que dans la fig. 3b, l'amplificateur à trois états 110 transmet ces adresses sur les lignes $U_1$ à $U_4$ avec le délai $t_m$ contrôlé par le circuit à retard 101.

Si aucune interruption IRQ n'arrive, les niveaux d'adresses, en progression naturelle, sont balayés sur les sorties $U_1$ à $U_4$ du registre 110, selon le chronogramme de la fig. 3a. Le balayage de ces niveaux d'adressses s'effectue donc entre 0 et N de manière cyclique. On peut prendre N égal au nombre d'unités reliées au bus. Le choix de N sera explicité plus loin.

Lorsqu'une interruption IRQ est appliquée sur l'entrée du circuit dérivateur 106, le compteur, grâce au circuit de synchronisation et de remise à zéro 102, est remis à zéro et le balayage des niveaux d'adresses commence au niveau le plus prioritaire (adresse 0). Ce mode de fonctionnement permet d'abréger la scrutation des niveaux de priorité vers les niveaux de priorité les plus faibles.

Dans ce mode de réalisation, l'amplificateur trois états peut être de type 8 T95 ou 74 LS 365 tandis que le compteur 103 peut être un compteur de type 74 93 et que le comparateur 107 peut être de type 74 85.

La fig. 6 représente schématiquement un autre mode de réalisation, des moyens 30 de balayage de niveaux d'adresses, avec priorité. Dans cet autre mode de réalisation, le balayage des niveaux de priorité est programmable de plusieurs manières. Le nombre de niveaux balayés peut être programmé à tout moment en asynchrone ou synchrone et une priorité maximale liée à l'arrivée d'interruptions peut être attribuée à un niveau quelconque ou successivement à des séquences de niveaux quelconques programmables en temps réel.

Le principe de fonctionnement est voisin de celui de la fig. 5, avec des adjonctions permettant d'effectuer les fonctions citées ci-dessus. Les moyens de balayage comprennent un oscillateur ou horloge 120, dont une sortie est reliée d'une part à un circuit de synchronisation automatique 121, constitué par exemple de bascules D (non représentées sur la figure), cette sortie étant reliée d'autre part à l'entrée H du compteur 122 binaire, synchrone et à chargement parallèle; les entrées de ce compteur sont reliées à des sorties d'un registre adressable 123, qui permet d'enregistrer, par l'intermédiaire d'un autre registre tampon 124, des séquences prédéterminées de niveaux de priorités maximales. Ces séquences sont préalablement chargées par l'intermédiaire du registre 124. Les sorties du compteur 122 sont reliées aux entrées d'un comparateur 125 qui reçoit sur ses autres entrées, en provenance d'un registre tampon 126, des signaux codés correspondant au nombre d'adresses (N) à balayer. Ces signaux proviennent en fait, de signaux de codage appliqués sur des entrées 127 du registre tampon 126.

Si aucune interruption (IRQ) n'arrive le compteur 122 est régulièrement incrémenté par l'entrée H d'horloge et ses valeurs de sorties binaires apparaissent sur les quatre lignes $U_1$ à $U_4$ de balayage d'adresses, après passage dans l'amplificateur trois états 131 validé par un circuit à retard 135 de stabilisation ($t_m$), commandé par l'horloge 120.

Quand la valeur binaire sur les sorties du compteur 122 atteint la valeur chargée dans le registre 126, l'égalité du comparateur 125 remet le compteur 122 à zéro et ainsi de suite.

L'arrivée d'un signal d'interruption IRQ sur le circuit de sychronisation 121 provoque selon l'état de l'élément binaire marqué X du registre 12, et par l'intermédiaire du circuit d'aiguillage 133 (démultiplexeur), soit la remise à zéro du compteur 132, soit son incrémentation (entrée H), puis après un délai de stabilisation introduit par le circuit à retard 134, le chargement asynchrone forcé du compteur 122 (par une ligne L) par les valeurs binaires présentes aux sorties du registre 123; la sélection des quatre valeurs de 4 e.b. se fait par les deux lignes ($1_1$, $1_2$) d'adressage de lecture du registre 123 qui sont reliées aux deux sorties de poids faible du compteur 132.

Donc, suivant la valeur de X (contrôle de mode de fonctionnement):

1er mode

La remise à zéro (RAZ) du compteur 132 sera effectuée à chaque interruption et la valeur chargée à l'adresse 0 du registre adressable 123 sera le niveau de priorité maximal qui sera forcé à cet instant, sur les lignes $U_1$ à $U_4$, via le compteur 122. Les niveaux suivants seront balayés dans l'ordre naturel jusqu'à la valeur Max fixée en 126 (N). On peut bien entendu modifier cette valeur à tout instant par le chargement du registre 123 adressable par les lignes $I_1$, $I_2$ et la valeur binaire issue du registre 124.

2e mode

A chaque interruption, le compteur 132 est incrémenté ainsi que l'adresse de lecture du registre 123; le chargement parallèle du compteur 122 est effectué par une nouvelle valeur contenue à cette adresse; la succession de ces valeurs représente la succession prédéterminée des niveaux de priorité maximale appliqués au système pour une succession donnée d'interruptions. Il est à remarquer que l'exemple de la fig. 6 donne une séquence de quatre valeurs successives (registre 123 de type 74 LS 670 par exemple) mais ce nombre n'est pas limitatif (plusieurs circuits et compteurs d'adressage adéquats).

Une variante consiste à utiliser un registre tampon simple à la place du registre 123. Ce registre sera rechargé (ou non) au moment voulu par la valeur du niveau de priorité maximale souhaité pour la prochaine interruption. Le signal IRQ force alors en sortie du circuit 121 le chargement parallèle de cette valeur sur le compteur 122.

Les composants particuliers possibles dans ce mode de réalisation, outre ceux déjà décrits, pour le mode de réalisation de la fig. 5, sont choisis comme suit: le compteur 122 est de type 74 LS 161, le registre adressable 123 est de type 74 LS 170 ou 74 LS 670, le compteur 132 est de type 74 LS 93, les registres 124 et 126 sont de type 74 LS 273, le multiplexeur 133 est réalisé à partir de portes connues.

Avec les modes de réalisation des fig. 5 et 6, l'utilisateur peut maîtriser divers niveaux d'optimisation de l'efficacité des transferts en plus de l'optimisation du temps de transfert $(t_m + t_t)$ mentionné plus haut: il peut dans les deux cas (fig. 5 et 6) par un choix judicieux des adresses, limiter le balayage cyclique au nombre exact des unités présentes ou, volontairement, à quelques unités plus prioritaires, pour un temps limité.

Dans le mode de réalisation de la fig. 6, il peut de plus redéfinir à tout instant un niveau de priorité maximale autre que le niveau 0, en mode interruptible, ou des séquences de ces niveaux de priorité maximales.

Dans les modes de réalisation qui viennent d'être décrits, on a représenté un balayage d'adresses commandé par quatre lignes $U_1$ à $U_4$ autorisant l'adressage de 15 unités distinctes seulement. Le nombre n'est pas limitatif; cependant, toute extension à un nombre de lignes supérieur implique le choix d'un matériel supplémentaire: compteurs, comparateurs, registres, etc., adaptés à ce nombre, aussi bien pour les moyens de balayage 30 que pour les moyens de comparaison d'émission et de réception de chaque unité.

Les fig. 7a et 7b représentent schématiquement les moyens logiques de gestion d'émission 47 et de gestion de réception 58, pour chaque unité reliée à cette interface.

La fig. 7a représente schématiquement les moyens logiques 47 de commande d'émission. Ces moyens logiques comprennent une bascule 140 de type D, qui reçoit sur une entrée le signal TLOAD à travers un circuit inverseur 143. Ce signal indique que l'unité émettrice correspondante, a des données prêtes à être émises (dans les registres 40, 43 de la fig. 2a). Une autre entrée de cette bascule est reliée à la sortie d'une porte NON-OU 141, dont une entrée est reliée à la sortie d'un amplificateur inverseur 142. L'entrée de cet amplificateur-inverseur reçoit le signal TDACC, indiquant que l'unité réceptrice a reçu les données. Une autre entrée de la porte NON-OU 141 peut recevoir un signal RAZ de remise à zéro. La sortie $\overline{Q}$ de la bascule 140 fournit le signal TDAV qui est appliqué à l'entrée 64 de la bascule 61 (fig. 2a) pour indiquer que les données peuvent être transmises sur le bus, à partir du registre d'émission correspondant.

La fig. 7b représente schématiquement les moyens logiques 58 de commande de réception. Ces moyens logiques comprennent une bascule 150, de type D, qui reçoit sur une entrée, le signal RDAV; une autre entrée de cette bascule est reliée à une sortie d'une porte NON-OU 151 dont une entrée reçoit le signal RDACC; une autre entrée de cette porte peut recevoir un signal RAZ de remise à zéro. Enfin, les moyens logiques de commande de réception, comprennent une autre porte OU 12, dont une entrée reçoit le signal RDACC et dont une autre entrée est reliée à la sortie Q de la bascule 150. La sortie de la porte OU 152 fournit le signal RDY. La sortie $\overline{Q}$ de la bascule 150 fournit un signal ETR, indiquant que l'unité réceptrice est prête ou non à recevoir les données.

La fig. 8 représente un autre mode de réalisation des moyens logiques 47 de gestion d'émission et des moyens logiques de gestion de réception 58, dans le cas où l'utilisateur a besoin de ces deux fonctions simultanément.

Les moyens logiques de gestion d'émission 47 comprennent deux bascules 160, 161 de type D. La bascule 161 comprend une entrée qui est reliée à la sortie d'un oscillateur 162, et une autre entrée qui reçoit un signal UDAV indiquant que l'unité émettrice est prête à envoyer des données. La sortie Q de la bascule 161 fournit le signal TLOAD à travers un circuit à retard, ainsi qu'un signal UTEN que l'utilisateur doit utiliser pour valider les sorties trois états de ses registres. Cette sortie est reliée à une entrée de la bascule 160 par un circuit à retard; une autre entrée de cette bascule est reliée à la sortie d'une porte NON-OU 163. L'une des entrées de cette porte NON-OU est reliée à une sortie d'un amplificateur-inverseur 164; une entrée de cet amplificateur reçoit le signal TDACC. Une autre entrée de la porte NON-OU 163 peut recevoir un signal RAZ de remise à zéro. La sortie $\overline{Q}$ de la bascule D 160 est reliée à une entrée de commande de la bascule 161. Cette sortie $\overline{Q}$ fournit le signal TDAV.

Les moyens logiques de gestion de réception 58 comprennent deux bascules de type D 165, 166. Une entrée de commande de la bascule 165 est reliée à une sortie de l'oscillateur 162, tandis qu'une autre entrée de cette bascule est reliée à une sortie Q de la bascule 166. Une entrée de commande de la bascule 166 reçoit le signal RDAV. Ces moyens logiques de commande de réception comprennent aussi une porte NON-OU 167, dont une entrée reçoit un signal UDAC qui indique aux moyens de gestion que l'utilisateur peut à nouveau recevoir des données; une autre entrée de cette porte peut recevoir un signal RAZ de remise à zéro. La sortie de la porte NON-OU 167 est reliée à une entrée de commande de la bascule 166. Enfin, les moyens logiques de commande de réception comprennent une autre porte OU 168 dont une entrée est reliée à la sortie Q de la bascule 166; une autre entrée de cette porte reçoit le signal UDAC. La sortie de la porte 168 fournit le signal RDY. La sortie $\overline{Q}$ de la bascule 165 fournit le signal ETR qui valide la sortie des donnés en attente dans le registre 50 (fig. 2b) et provoque, après un délai de stabilisation le signal URDAV destiné à l'enregistrement final des données par l'utilisateur.

L'oscillateur 162 est un oscillateur symétrique qui autorise alternativement les opérations d'émission et de réception. La fréquence de l'oscillateur est réglée en fonction des besoins de l'utilisateur et de la technologie des composants utilisés.

On a également représenté sur cette figure, sans les référencer, des résistances et des capacités intervenant de manière connue dans le montage des bascules et des portes. Les bascules D peuvent être par exemple de type 74 LS 74.

La fig. 9 représente schématiquement des moyens qui permettent de boucler des signaux de test aux principaux moyens utilisés dans l'interface et qui correspondent à chaque unité reliée au bus B. Ces moyens de test sont constitués de la manière suivante: des lignes 180 relient les sorties du registre d'adresse d'émission aux entrées du registre d'adresse de réception correspondant à la même unité. Les moyens de test comprennent aussi une bascule 181 de type D, de la série 74 LS 74 par exemple; une entrée de commande de cette bascule est reliée à la sortie d'une porte NON-OU 182. Une entrée de cette porte peut recevoir un signal de remise à zéro RAZ, tandis qu'une autre entrée reçoit le signal TDACC. Une sortie $\overline{Q}$ de la bascule 181 fournit le signal TDAV qui est appliqué à l'entrée 64 de la bascule 61. Une autre sortie de cette bascule fournit le signal TLOAD qui est appliqué directement aux registres d'émission 40, 43. Ces moyens de test comprennent aussi une autre bascule 183, de type D, dont une entrée est reliée à la sortie de la porte NON-OU 182. Cette bascule fournit sur une sortie Q le signal RDY qui est appliqué à l'entrée 90 de la bascule 81; elle reçoit aussi sur une autre entrée, le signal RDAV indiquant que les données sont reçues.

Ces moyens de test permettent de vérifier les moyens d'émission et de réception correspondant à l'unité de traitement ou à chacune des unités périphériques.

Si les transmissions des données entre les unités émettrices et/ou réceptrices et l'interface ne sont pas de type bidirectionnel (tel que supposé tout au long de la description), mais sont physiquement séparées (émission et réception) tel que représenté sur la fig. 1 (liaisons 11, 8 et 20, 23) il faut sur le schéma de la fig. 9, prévoir le bouclage des données reçues sur les données émises (lignes 184).

Dans l'interface qui vient d'être décrite, les moyens 30 de balayage des adresses et d'affectation de priorités sont particulièrement importants. Ces moyens ont une vitesse de balayage réglable à partir de l'oscillateur. Les moyens de test permettent en fait, grâce à un test en boucle de l'émission et de la réception, d'ajuster la vitesse des moyens de balayage des adresses, jusqu'à constater l'absence totale d'erreur dans la transmission de données.

L'interface qui vient d'être décrite est conçue de manière à permettre aux unités qu'elle contrôle de fonctionner en temps réel. Tous les moyens qu'elle utilise sont intégrables.

Les moyens 30 de balayage sont évidemment communs à l'ensemble des unités reliées au bus, quel que soit le nombre de ces unités. Ils peuvent être en pratique montés sur une carte de communication avec le contrôleur, ou même directement intégrés dans la structure physique du bus.

Une ligne du bus (non représentée), chargée en même temps que les données, par l'unité émettrice, est reçue en synchronisme avec les données, par l'unité réceptrice; cette ligne est chargée par un élément binaire indiquant conventionnellement la longueur des blocs de données à transférer et donc, éventuellement la possibilité de n'effectuer qu'une seule lecture; il en résulte un niveau supplémentaire d'optimisation de la vitesse de transfert.

D'autres lignes du bus (non représentées) peuvent être prévues pour véhiculer à travers l'interface, des signaux provenant d'une horloge temps réel implantée dans une unité utilisateur; ces signaux permettent une synchronisation rigoureuse interne de toutes les fonctions utilisateurs si nécessaire. Ce système d'interface fonctionne en processeur parallèle, synchrone et non nodal.

La structure de l'interface décrite peut aussi bien fonctionner avec des lignes de bus répondant aux normes électriques TTL par exemple, tel que décrit ci-dessus, qu'avec des lignes optiques par exemple, capables d'assurer les mêmes fonctions; en particulier ces lignes optiques doivent être bidirectionnelles et fonctionner selon un mode équivalent au mode «trois états» ou «collecteur ouvert». Bien entendu, elles nécessitent l'utilisation de moyens de conversion optoélectroniques.

## Revendications

1. Interface (1) de gestion d'échanges d'informations sur un bus (B) de communication entre au moins une unité (2) de contrôle et des unités périphériques (3, 4), ou entre ces unités périphériques repérées par des adresses, ces informations contenant des données émises par l'unité de contrôle (2) ou au moins l'une des unités périphériques (3, 4) dite unité émettrice, et contenant aussi une adresse de destination correspondant à l'unité centrale ou à l'unité périphérique dite unité réceptrice, par laquelle ces données doivent être reçues, comprenant respectivement pour l'unité de contrôle (2) et pour chacune des unités périphériques (3, 4), des moyens d'émission (5, 6, 7) de données comportant des entrées (8, 9, 10) qui sont respectivement reliées à des sorties (11, 12, 13) de cette unité de contrôle et de ces unités périphériques, des sorties (27, 28, 29) de ces moyens d'émission étant respectivement reliées au bus pour gérer l'émission de données vers l'unité possédant ladite adresse de destination, des moyens de réception de données (14, 15, 16) comportant des entrées (17, 18, 19) qui sont respectivement reliées au bus (B), des sorties (20, 21, 22) de ces moyens de réception étant respectivement reliées à des entrées (23, 24, 25) de l'unité de contrôle (2) et des unités périphériques (3, 4), pour gérer la réception des données respectivement par l'unité de contrôle ou par l'unité périphérique possédant ladite adresse de destination, et des moyens (26) de gestion reliés aux moyens d'émission (5, 6, 7), aux moyens (14, 15, 16) de réception et au bus (B) pour gérer l'adressage des diverses unités au cours des échanges, pour autoriser une émission de données sur le bus, vers ladite unité d'adresse de destination et pour gérer la réception des données par cette unité, les priorités d'accès au bus pour les diverses unités pouvant être variables et programmables en temps réel, toute unité pouvant échanger des informations avec toute autre unité, sans nécessiter l'intervention de l'unité de contrôle, les moyens (26) de gestion comprenant des moyens (30) de balayage pour appliquer sur le bus (B) des signaux de balayage des adresses des unités (2, 3, 4) susceptibles d'émettre des données sur le bus, et, pour chacune des unités, des moyens de comparaison d'adresses de balayage (31b ou 32b ou 33b) reliés aux moyens de balayage (30) et respectivement aux moyens d'émission pour comparer l'adresse en cours de balayage avec l'adresse de l'unité ayant des données à émettre vers une unité réceptrice d'adresse prédéterminée, ces moyens de comparaison d'adresse de balayage fournissant au moyen d'émission correspondant à l'unité émettrice, un signal LEN d'autorisation de données vers le bus, pendant un intervalle de temps $(t_t)$ correspondant à la détection effective de cette égalité, ce signal LEN d'autorisation générant sur le bus un signal LDAV d'indication de présence de données sur le bus, et des moyens (31a, 32a, 33a) de comparaison d'adresses de destination reliés au bus (B) et respectivement, aux moyens de réception, pour comparer l'adresse de destination des données émises sur le bus, avec l'adresse de chaque unité, et pour fournir sur le bus un signal LDACC d'acceptation de réception de données par l'unité d'adresse de destination lorsqu'une égalité est détectée entre l'adresse de destination des données émises et l'adresse de l'unité réceptrice présentant ladite adresse de destination caractérisée en ce que les moyens de balayage des adresses (30) sont des moyens appliquant en permanence des signaux de balayage sur le bus, les adresses de destination étant appliquées uniquement aux moyens de comparaison (31a, 32a, 33a) d'adresses de destination des unités réceptrices, les registres de réception d'adresses (54) de ces unités réceptrices recevant à la place de ces adresses de destination, les adresses de balayage qui sont, pour un transfert donné, l'adresse de la source émettrice de données.

2. Interface selon la revendication 1, caractérisée en ce que les moyens (6) d'émission de chaque unité (2 ou 3 ou 4) émettrice ou réceptrice comporte un registre-tampon d'émission (40) d'adresse de destination de données, ce registre tampon d'émission d'adresse de destination comprenant des entrées (41) qui sont reliées à des sorties d'adresse de l'unité émettrice (3) pour enregistrer l'adresse de destination de l'unité réceptrice, des sorties (42) de ce registre d'adresses étant reliées au bus (B), un registre-tampon d'émission de données (43) à émettre vers l'unité réceptrice (4), des entrées (44) de ce registre d'émission de données étant reliées à des sorties de données de l'unité émettrice (3), des sorties (46) de ce registre-tampon d'émission étant reliées au bus (B), le signal LEN d'autorisation d'émission de données sur le bus (B) étant fourni aux registres tampon d'émission d'adresses et de données (40, 43), cette émission étant effective lorsque les moyens de comparaison d'adresse de destination (33a) de l'unité réceptrice (4) fournissent ledit signal LDACC d'acceptation de réception de données.

3. Interface selon la revendication 2, caractérisée en ce que le moyen de réception (16) de chaque unité (2, 3 ou 4) comprend un registre tampon (50) de réception des données provenant d'une autre unité (2) émettrice, ce registre tampon (50) de réception de données comprenant des entrées (51) qui sont reliées au bus (B) pour recevoir des données, des sorties (52) de ce registre tampon de réception de données étant reliées à des entrées de données de l'unité réceptrice (4) qui lui correspond, un registre tampon de réception d'adresse (54) comprenant des entrées (55b) qui sont reliées au bus (B) et aux moyens (30) de balayage pour recevoir l'adresse de l'unité émettrice de ces données, et des entrées (55a) qui sont reliées au bus (B) pour recevoir des informations supplémentaires d'adressage destinées au récepteur et issues de l'émetteur, des sorties (56) de ce registre de réception d'adresse étant reliées à des entrées de l'unité réceptrice (4), le signal LDACC d'acceptation de réception de données étant fourni par les moyens de comparaison (33a) d'adresse de réception, lorsque les moyens de comparaison d'adresse (32b) de l'unité émettrice (3) ont fourni le signal LDAV d'autorisation d'émission de données.

4. Interface selon la revendication 3, caractérisée en ce qu'elle comprend en outre pour chaque unité, des moyens logiques de gestion d'émission (47) reliés à l'unité émettrice correspondante, ces moyens (47) fournissant un signal TLOAD appliqué aux registres tampons de l'unité émettrice (40, 43), et un signal TDAV appliqué sur une entrée des moyens de comparaison d'émission (32b), et des moyens logiques (58) de gestion de réception, reliés à l'unité réceptrice correspondante, ces moyens fournissant un signal RDY appliqué sur une entrée des moyens de comparaison de réception (33a), si l'unité réceptrice correspondante est prête à recevoir des données, les moyens de comparaison de réception (33a) étant autorisés par ce signal RDY, en cas d'égalité avec l'adresse de destination, à répondre au signal d'autorisation LDAV, en effectuant d'une part, le chargement des registres de réception (50, 54) et, d'autre part, en générant le signal LDACC d'acceptation sur le bus, et en signalant la réception des données aux moyens de gestion de réception (58), qui eux-mêmes répondent en changeant l'état logique du signal RDY, ce signal bloquant immédiatement les moyens de réception (33a) et validant les sorties des registres (50, 54) de réception, par un signal de validation ETR, le signal d'acceptation LDACC ainsi généré sur le bus étant appliqué aux moyens de gestion d'émission (47) pour les remettre dans leur état initial indiquant à l'unité émettrice l'acceptation par l'unité réceptrice du transfer en cours.

5. Interface selon la revendication 4, caractérisée en ce que les moyens de comparaison (31b ou 32b ou 33b) d'adresse d'émission comprennent, pour chaque unité, un comparateur d'adresse (60) relié au bus (B), pour recevoir des moyens de balayage (30), les signaux de balayage d'adresse, ce comparateur étant aussi relié à l'unité (3) susceptible d'émettre des données, pour comparer l'adresse de cette unité avec les adresses balayées, et une bascule d'émission (61) de type D, reliée à une sortie (63) du comparateur d'émission (60) ainsi qu'à une sortie (65) des moyens logiques de gestion d'émission (47) fournissant le signal TDAV, une sortie (66) de cette bascule fournissant au bus (B) le signal LEN d'autorisation d'émission et le signal LDAV d'indication de présence de données lorsqu'il y a détection d'égalité entre l'adresse de l'unité (3) émettrice, et l'une des adresses balayées par les moyens de balayage (30), cette bascule d'émission (61) se trouvant remise automatiquement en état de non émission à la fin de l'égalité d'adresse balayée à la sortie du comparateur d'adresse (60).

6. Interface selon la revendication 5, caractérisée en ce que les moyens de comparaison d'adressage (33a) de réception de chaque unité (4) comprennent un comparateur de réception (80) relié au bus (B), pour recevoir l'adresse de destination des données, ce comparateur étant aussi relié à l'unité (4) réceptrice correspondante pour recevoir l'adresse de cette unité, et une bascule de réception (81) de type D reliée à une sortie (82) du comparateur (80), à une sortie des moyens logiques de gestion de réception (58) correspondant à cette unité réceptrice (4), cette bascule étant aussi reliée au bus (B), pour recevoir le signal LDAV d'autorisation d'émission de données sur le bus, une sortie de cette bascule fournissant au registre de réception de données (50), le signal RDAV d'autorisation de réception de données par ce registre, lorsque le comparateur de réception détecte une égalité entre l'adresse de l'unité (4) réceptrice correspondante et l'adresse de destination des données fournie par le bus, lorsque la bascule (81) a reçu le signal LDAV d'autorisation d'émission de données, et lorsque les moyens logiques de gestion (58) ont reçu le signal d'autorisation de réception RDAV et ont fourni à la bascule de réception (81) un signal RDY indiquant que l'unité réceptrice (4) est alors prête à recevoir les données, ce signal RDY étant impérativement nécessaire pour la mise en compte du signal LDAV, cette bascule de réception (81) se trouvant remise en état de non réception par la fin de l'égalité de l'adresse de destination avec l'adresse de l'unité réceptrice, en sortie du comparateur de réception (80).

7. Interface selon la revendication 6, caractérisée en ce que les moyens (30) de balayage d'adresses sont des moyens non reprogrammables qui balayent la totalité ou une partie des adresses des unités, dans un ordre prédéterminée.

8. Interface selon la revendication 6, caractérisée en ce que les moyens (30) de balayage d'adresses sont des moyens programmables, le nombre d'adresses balayées pouvant être programmées et reprogrammées en temps réel.

9. Dispositif selon la revendication 8, caractérisé en ce que les moyens (30) de balayage des adresses et de leur niveau de priorité sont redéclenchés par un signal d'interruption IRQ.

10. Interface selon la revendication 6, caractérisée en ce que les moyens (30) de balayage sont programmables pour balayer les adresses les plus prioritaires, selon des valeurs d'adresses prédéterminées ou selon des séquences déterminées de succession de ces adresses de priorité maximale, les valeurs de ces adresses pouvant être indépendamment reprogrammées en temps réel, ces moyens étant redéclenchés par un signal d'interruption IRQ.

11. Interface selon la revendication 10, caractérisée en ce que les lignes du bus sont des lignes électriques de transmission.

12. Interface selon la revendication 10, caractérisée en ce que les lignes du bus sont des lignes optiques reliées à des moyens optoélectroniques.

**Patentansprüche**

1. Schnittstelle (1) für Informationsaustauschsteuerung auf einem Kommunikationsbus (B) zwischen mindestens einer Steuerungseinheit (2) und peripheren Einheiten (3, 4) oder zwischen diesen peripheren Einheiten, die durch Adressen bezeichnet sind, wobei diese Informationen von der Steuerungseinheit (2) oder von mindestens einer der peripheren Einheiten (3, 4), Sendeeinheit genannt, abgegebene Daten und auch eine Bestimmungsadresse enthalten, die der Zentraleinheit oder der peripheren Einheit, Empfangseinheit, entspricht, von der die Daten empfangen werden sollen, mit Sendemitteln (5, 6, 7) für die Daten für die Steuerungseinheit (2) bzw. jede der peripheren Einheiten (3, 4), wobei die Sendemittel (5, 6, 7) Eingänge (8, 9, 10) aufweisen, die mit den Ausgängen (11, 12, 13) dieser Steuerungseinheit bzw. dieser peripheren Einheiten verbunden sind und die Ausgänge (27, 28, 29) dieser Sendemittel jeweils mit dem Bus verbunden sind, um die Ausgabe der Daten zu der die Bestimmungsadresse aufweisenden Einheit zu lenken, mit Empfangsmitteln (14, 15, 16) für die Daten, die Eingänge (17, 18, 19), welche jeweils mit dem Bus (B) verbunden sind, und Ausgänge (20, 21, 22) aufweisen, die jeweils mit den Eingängen (23, 24, 25) der Steuerungseinheit (2) bzw. den peripheren Einheiten (3, 4) verbunden sind, um den Empfang der Daten durch die Steuerungseinheit oder die die Bestimmungsadresse aufweisende, periphere Einheit zu steuern, und mit Steuerungsmitteln (26), die mit den Sendemitteln (5, 6, 7), den Empfangsmitteln (14, 15, 16) und dem Bus (B) verbunden sind, um die Adressierung der verschiedenen Einheiten während des Austausches zu steuern, um eine Ausgabe von Daten auf den Bus zu der die Bestimmungsadresse aufweisenden Einheit zu erlauben und um den Empfang der Daten durch diese Einheit zu steuern, wobei die Zugriffsprioritäten zu dem Bus für die verschiedenen Einheiten veränderbar und in Realzeit programmierbar sein können, jede Einheit Informationen mit jeder anderen Einheit ohne die Notwendigkeit des Eingriffs der Steuerungseinheit austauschen kann und die Steuerungsmittel (26) Abfragemittel (30), um auf den Bus (B) Adressenabfragesignale für die Einheiten (2, 3, 4) abzugeben, die Daten auf den Bus ausgeben können, und für jede der Einheiten Abfrageadressenverleichsmittel (31b oder 32b oder 33b), die mit den Abfragemitteln (30) und den jeweiligen Sendemitteln verbunden sind, um die laufende Abfrageadresse mit der Adresse der Einheit zu vergleichen, die zu einer Empfangseinheit mit einer vorbestimmten Adresse auszusendende Daten besitzt, wobei diese Abfrageadressenvergleichsmittel dem der Sendeeinheit entsprechenden Sendemittel ein Freigabesignal LEN für die Daten zu dem Bus während einer Zeitdauer ($t_t$) liefert, die der effektiven Erfassung dieser Gleichheit entspricht, wobei dieses Freigabesignal LEN auf dem Bus ein Anzeigesignal LDAV für das Vorhandensein von Daten auf dem Bus erzeugt, und Bestimmungsadressenvergleichsmittel (31a, 32a, 33a) aufweist, die mit dem Bus (B) und dem jeweiligen Empfangsmittel verbunden sind, um die Bestimmungsadresse der auf den Bus ausgegebenen Daten mit der Adresse einer jeden Einheit zu vergleichen und auf den Bus ein Annahmesignal LDACC für die Aufnahme der Daten durch die Einheit mit der Bestimmungsadresse zu geben, wenn eine Gleichheit zwischen der Bestimmungsadresse der ausgesandten Daten und der Adresse der die Bestimmungsadresse aufweisenden Empfangseinheit festgestellt worden ist, dadurch gekennzeichnet, dass die Adressenabfragemittel (30) Mittel sind, die dauernd Abfragesignale auf den Bus geben, die Bestimmungsadressen ausschliesslich an die Bestimmungsadressenvergleichsmittel (31a, 32a, 33a) der Empfangseinheiten gegeben werden, die Adressenempfangsregister (54) dieser Empfangseinheiten statt dieser Bestimmungsadressen die Abfrageadressen erhalten, die für eine vorgegebene Übertragung die Adresse der Sendequellen der Daten ist.

2. Schnittstelle nach Anspruch 1, dadurch gekennzeichnet, dass die Sendemittel (6) einer jeden Sende- oder Empfangseinheit ein Sendepufferregister (40) für die Bestimmungsadresse der Daten, wobei dieses Pufferregister für die Bestimmungsadresse Eingänge (41) umfasst, die mit Adressenausgängen der Sendeeinheit (3) verbunden sind, um die Bestimmungsadresse der Empfangseinheit aufzuzeichnen, und Ausgänge (42) dieses Adressenregisters mit dem Bus (B) verbunden sind, und ein Sendepufferregister (43) für die zu der Empfangseinheit (4) auszugebenden Daten aufweist, Eingänge (44) dieses Senderegisters für Daten mit Datenausgängen der Empfangseinheit (3) verbunden sind, Ausgänge (46) dieses Sendepufferregisters mit dem Bus (B) verbunden sind, das Freigabesignal LEN zur Ausgabe von Daten auf den Bus (B) den Sendepufferregistern (40, 43) für die Adressen und die Daten zugeführt wird, wobei die Abgabe tatsächlich erfolgt, wenn die Vergleichsmittel (33a) für die Bestimmungsadresse der Empfangseinheit (4) das Annahmesignal LDACC für den Empfang von Daten liefern.

3. Schnittstelle nach Anspruch 2, dadurch gekennzeichnet, dass die Empfangsmittel (16) jeder Einheit (2, 3 oder 4) ein Pufferregister (50) zur Aufnahme von Daten, die von einer anderen Sendeeinheit (2) herkommen, wobei das Pufferregister (50) zur Aufnahme von Daten Eingänge (51), die mit dem Bus (B) zur Aufnahme von Daten verbunden sind, und Ausgänge (52) aufweist, der mit Dateneingängen der diesem entsprechenden Empfangseinheit (4) verbunden sind und ein Pufferregister für die Aufnahme einer Adresse (54) umfasst, welches Eingänge (55b), die mit dem Bus (B) und den Abfragemitteln (30) zur Aufnahme der Adresse der Sendeeinheit dieser Daten verbunden sind, und Eingänge (55a) aufweist, die mit dem Bus (B) zur Aufnahme von zusätzlichen Adressierungsinformationen verbunden sind, die für den Empfänger bestimmt und von dem Sender abgegeben worden sind, dass die Ausgänge (56) dieses Adressenempfangsregisters mit Eingängen der Empfangseinheit (4) verbunden sind, dass das Annahmesignal LDACC zur Aufnahme von Daten von den Vergleichsmitteln (33a) für die Empfangsadresse geliefert wird, wenn die Adressenvergleichsmittel (32b) der Sendeeinheit (3) das Freigabesignal LDAV für das Aussenden von Daten abgegeben haben.

4. Schnittstelle nach Anspruch 3, dadurch gekennzeichnet, dass sie ferner für jede Einheit logische Mittel (47) zur Ausgabesteuerung, die mit der entsprechenden Sendeeinheit verbunden sind, wobei diese Mittel (47) ein an die Pufferregister (40, 43) der Sendeeinheit angelegtes Signal TLOAD und ein an einen Eingang der Sendevergleichsmittel (32b) angelegtes Signal TDAV liefern, und logische Mittel (58) für die Empfangssteuerung umfasst, die mit einer entsprechenden Empfangseinheit verbunden sind, dass diese Mittel ein an einen Eingang der Empfangsvergleichsmittel (33a) gelegtes Signal RDY liefern, wenn die entsprechende Empfangseinheit zur Aufnahme von Daten bereit ist, dass im Falle der Gleichheit mit der Bestimmungsadresse die Empfangsvergleichsmittel (33a) durch dieses Signal RDY autorisiert sind, auf das Freigabesignal LDAV anzusprechen, indem einerseits das Laden der Empfangsregister (50, 54) durchgeführt wird und andererseits indem das Annahmesignal LDACC auf dem Bus erzeugt und die Aufnahme von Daten den Empfangssteuerungsmitteln (58) mitgeteilt wird, die wiederum unter Änderung des logischen Zustands des Signals RDY antworten, wobei dieses Signal unmittelbar die Empfangsmittel (33a) sperrt und die Ausgänge der Empfangsregister (50, 54) durch ein Gültigmachungssignal ETR gültig macht und das derart auf dem Bus erzeugte Annahmesignal LDACC an die Sendesteuerungsmittel (47) gegeben wird, um sie in ihren Ausgangszustand zurückzuführen, was der Sendeeinheit die Annahme der laufenden Übertragung durch die Empfangseinheit anzeigt.

5. Schnittstelle nach Anspruch 4, dadurch gekennzeichnet, dass die Vergleichsmittel (31b oder 32b oder 33b) der Sendeadresse für jede Einheit einen Adressenkomparator (60), der mit dem Bus (B) verbunden ist, um von den Abfragemitteln (30) die Adressenabfragesignale zu erhalten, wobei dieser Komparator auch mit der Einheit (3) verbunden ist, die Daten aussenden kann, um die Adresse dieser Einheit mit den Abfrageadressen zu vergleichen, und eine Sendekippschaltung (61) vom Typ D umfasst, die mit einem Ausgang (63) des Sendekomparators (60) sowie mit einem Ausgang (65) der logischen Sendesteuerungsmittel (47) verbunden ist, die das Signal TDAV liefern, wobei ein Ausgang (66) dieser Kippschaltung an den Bus (B) das Sendefreigabesignal LEN und das Anzeigesignal LDAV über das Vorhandensein von Daten liefert, wenn Gleichheit zwischen der Adresse der Sendeeinheit (3) und einer der Abfrageadressen von den Abfragemitteln (30) festgestellt worden ist, wobei sich diese Sendekippschaltung (61) automatisch in den Nichtsendezustand am Ende der Gleichheit der Abfrageadresse an dem Ausgang des Adressenkomparators (60) zurückgesetzt befindet.

6. Schnittstelle nach Anspruch 5, dadurch gekennzeichnet, dass die Vergleichsmittel (33a) für die Empfangsadresse einer jeden Einheit (4) einen Empfangskomparator (80), der mit dem Bus (B) verbunden ist, um die Bestimmungsadresse der Daten zu empfangen, wobei dieser Komparator auch mit der entsprechenden Empfangseinheit (4) verbunden ist, um die Adresse dieser Einheit zu erhalten, und eine Empfangskippschaltung (81) vom Typ D umfasst, die mit einem Ausgang (82) des Komparators (80), einem Ausgang der logischen Empfangssteuerungsmittel (58), der dieser Empfangseinheit (4) entspricht, und auch mit dem Bus (B) verbunden ist, um das Freigabesignal LDAV zur Abgabe von Daten auf den Bus zu erhalten, dass ein Ausgang dieser Kippschaltung dem Empfangsregister (50) der Daten das Freigabesignal RDAV für die Aufnahme von Daten durch dieses Register liefert, wenn der Empfangskomparator eine Gleichheit zwischen der Adresse der entsprechenden Empfangseinheit (4) und der von dem Bus abgegebenen Bestimmungsadresse für Daten feststellt, wenn die Kippschaltung (81) das Freigabesignal LDAV für die Abgabe von Daten erhalten hat und die logischen Steuerungsmittel (58) das Freigabesignal RDAV für die Aufnahme erhalten haben und der Empfangskippschaltung (81) ein Signal RDY zugeführt haben, welches anzeigt, dass die Empfangseinheit (4) dann zur Aufnahme der Daten bereit ist, wobei dieses Signal RDY unabdingbar erforderlich ist, um das Signal LDAV in Rechnung zu stellen, dass sich diese Empfangskippschaltung (81) in dem Nichtempfangszustand durch das Ende der Gleichheit der Bestimmungsadresse mit der Adresse der Empfangseinheit am Ausgang des Empfangskomparators (80) zurückgesetzt befindet.

7. Schnittstelle nach Anspruch 6, dadurch gekennzeichnet, dass die Adressenabfragemittel (30) nicht wieder programmierbare Mittel sind, die die Gesamtheit oder einen Teil der Adressen der Einheiten in einer vorbestimmten Ordnung abfragt.

8. Schnittstelle nach Anspruch 6, dadurch gekennzeichnet, dass die Adressenabfragemittel (30) programmierbare Mittel sind, wobei die Anzahl der abgefragten Adressen programmiert und in Realzeit wieder programmiert werden können.

9. Schnittstelle nach Anspruch 8, dadurch gekennzeichnet, dass die Mittel (30) zum Abfragen der Adressen und ihre Prioritätsniveaus durch ein Unterbrechungssignal IRQ wiederauslösbar sind.

10. Schnittstelle nach Anspruch 6, dadurch gekennzeichnet, dass die Abfragemittel (30) programmierbar sind, um die Adressen mit den höchsten Prioritätsniveaus gemäss vorbestimm- ten Adressenwerten oder gemäss vorbestimm- ten Folgesequenzen dieser Adressen maximaler Priorität abzufragen, wobei die Werte dieser Adressen unabhängig in Realzeit wieder programmierbar sind, und dass die Mittel durch ein Unterbrechungssignal IRQ wieder ausgelöst wer- den.

11. Schnittstelle nach Anspruch 10, dadurch gekennzeichnet, dass die Leitungen des Busses elektrische Übertragungsleitungen sind.

12. Schnittstelle nach Anspruch 10, dadurch gekennzeichnet, dass die Leitungen des Busses optische Leitungen sind, die mit opto-elektronischen Mitteln verbunden sind.

**Claims**

1. Interface (1) for the management of information signal exchanges on a communications bus (B) between at least one control unit (2) and peripheral units (3, 4), or between these peripheral units referenced by addresses, these information signals containing data sent by the control unit (2) or at least one of the peripheral units (3, 4) known as the sending unit, and also containing a destination address corresponding with the central unit or with the peripheral unit known as the receiving unit, through which these data must be received, including for the control unit (2) and for each of the peripheral units (3, 4) respectively, means (5, 6, 7) of sending data including inputs (8, 9, 10) which are connected to the outputs (11, 12, 13) of this control unit and of these peripheral units respectively, outputs (27, 28, 29) of these means of sending being respectively connected to the bus to manage the sending of data to the unit having the said destination address, means of data reception (14, 15, 16) including inputs (17, 18, 19) which are respectively connected to the bus (B), outputs (20, 21, 22) of these means of reception being respectively connected to inputs (23, 24, 25) of the control unit (2) and of the peripheral units (3, 4) in order to manage the reception of data by the control unit or by the peripheral unit having the said destination address respectively and means (26) of management connected to the means of sending (5, 6, 7), to the means (14, 15, 16) of reception and to the bus (B) in order to manage the addressing of the various units during the exchanges, in order to authorize a sending of data on the bus, to the said destination address unit and in order to manage the reception of data by this unit, the access priorities to the bus for the various units being able to be variable and programmable in real time, any unit being able to exchange information signals with any other unit, without necessitating the intervention of the control unit, the means (26) of management including means (30) of scanning in order to apply to the bus (B) signals scanning the addresses of the units (2, 3, 4) capable of sending data on the bus, and, for each of the units, means of comparing scanning addresses (31b or 32b or 33b) connected to the means of scanning (30) and respectively to the means of sending in order to compare the address being scanned with the address of the unit having data to send to a receiving unit of predetermined address, these means of scanning address comparison providing the means of sending corresponding with the sending unit with a signal LEN authorizing data onto the bus during a time interval $(t_t)$ corresponding with the effective detection of this equality, this authorization signal LEN generating on the bus a signal LDAV indicating the presence of data on the bus, and means (31a, 32a, 33a) of comparison of destination addresses connected to the bus (B) and respectively to the means of reception, in order to compare the destination address of the data sent on the bus with the address of each unit, and to provide on the bus a signal LDACC of acceptance of reception of data by the destination address unit when an equality is detected between the destination address of the sent data and the address of the receiving unit having the said destination address characterized in that the means of address scanning (30) are means continuously applying scanning signals on the bus, the destination addresses being applied only to the means of comparison (31a, 32a, 33a) of receiving unit destination addresses, the address reception registers (54) of these receiving units receiving in the place of these destination addresses, the scanning addresses which are, for a given transfer, the address of the data sending source.

2. Interface according to Claim 1, characterized in that the means of sending (6) of each sending or receiving unit (2 or 3 or 4) include a sending data destination address buffer register (40), this sending destination address buffer register including inputs (41) which are connected to address outputs of the sending unit (3) in order to register the destination address of the receiving unit, outputs (42) of this address register being connected to the bus (B), a sending buffer register (43) for data to be sent to the receiving unit (4), inputs (44) of this data sending register being connected to data outputs of the sending unit (3), outputs (46) of this sending buffer register being connected to the bus (B), the signal LEN authorizing the sending of data on the bus (B) being supplied to the sending address and data buffer registers (40, 43), this sending being effective when the means of destination address comparison (33a) of the receiving unit (4) provide the said signal LDACC of accepting the reception of data.

3. Interface according to Claim 2, characterized in that the means of reception (16) of each unit (2, 3 or 4) include a buffer register (50) for the reception of data coming from another sending unit (2), this data reception buffer register (50) including inputs (51) which are connected to the bus (B) in order to receive data, outputs (52) of this data reception buffer register being connected to data inputs of the receiving unit (4) corresponding with it, an address reception buffer register (54) including inputs (55b) which are connected to the bus (B) and to the means (30) of scanning in order to receive the address of the unit sending these data, and inputs (55a) which are connected to the bus (B) in order to receive additional addressing information intended for the receiver and coming from the sender, outputs (56) of this address reception register being connected to inputs of the receiving unit (4), the signal LDACC for accepting the reception of data being provided by the means of comparison (33a) of reception address, when the means of address comparison (32b) of the sending unit (3) have provided the signal LDAV authorizing the sending of data.

4. Interface according to Claim 3, characterized in that it also includes for each unit, logical means of managing the sending (47) connected to the corresponding sending unit, these means (47) providing a signal TLOAD applied to the buffer registers of the sending unit (40, 43), and a signal TDAV applied to an input of the sending means of comparison (32b), and logical means (58) of managing the reception, connected to the corresponding reception unit, these means providing a signal RDY applied to an input of the reception comparison means (33a), if the corresponding receiving unit is ready to receive data, the reception means of comparison (33a) being authorized by this signal RDY, in the case of equality with the destination address, to respond to the authorization signal LDAV, by carrying out on the one hand the loading of the reception registers (50, 54) and, on the other hand, by generating the acceptance signal LDACC on the bus, and by signalling the reception of data to the reception means of management (58), which themselves respond by changing the logical state of the signal RDY, this signal immediately inhibiting the means of reception (33a) and validating the outputs of the reception registers (50, 54), by a validation signal ETR, the acceptance signal LDACC thus generated on the bus being applied to the sending means of management (47) in order to return them to their initial state indicating to the sending unit the acceptance by the receiving unit of the transfer in progress.

5. Interface according to Claim 4, characterized in that the sending address means of comparison (31b or 32b or 33b) include, for each unit, an address comparator (60) connected to the bus (B) in order to receive from the means of scanning (30) the address scanning signals, this comparator also being connected to the unit (3) capable of sending data, in order to compare the address of this unit with the scanned addresses, and a sending D-type flip-flop (61) connected to an output (63) of the sending comparator (60) as well as to an output (65) of the logical means of sending management (47) providing the signal TDAV, an output (66) of this flip-flop providing to the bus (B) the signal LEN authorizing the sending and the signal LDAV indicating the presence of data when there is detection of equality between the address of the sending unit (3) and one of the addresses scanned by the means of scanning (30), this sending flip-flop (61) being automatically reset to the non-sending state at the end of the equality of address scanned at the output of the address comparator (60).

6. Interface according to Claim 5, characterized in that the reception addressing means of comparison (33a) of each unit (4) include a reception comparator (80) connected to the bus (8), in order to receive the data destination address, this comparator also being connected to the corresponding receiving unit (4) in order to receive the address of this unit, and a D-type reception flip-flop (81) connected to an output (82) of the comparator (80), to an output of the logical means of reception management (58) corresponding with this receiving unit (4), this flip-flop also being connected to the bus (8), in order to receive the signal LDAV authorizing the sending of data on the bus, an output of this flip-flop providing, to the data reception register (50), the signal RDAV authorizing reception of data by this register, when the reception comparator detects an equality between the address of the corresponding receiving unit (4) and the destination address of the data provided by the bus, when the flip-flop (81) has received the signal LDAV authorizing the sending of data, and when the logical means of management (58) have received the signal authorizing reception RDAV and have provided to the reception flip-flop (81) a signal RDY indicating that the receiving unit (4) is then ready to receive data, this signal RDY being absolutely necessary for the taking of the signal LDAV into account, this reception flip-flop (8) being reset to its non-receiving state by the end of the equality between the destination address and the address of the receiving unit, at the output of the reception comparator (80).

7. Interface according to Claim 6, characterized in that the means of scanning addresses (30) are non-reprogrammable means which scan the totality or some of the addresses of the units in a predetermined order.

8. Interface according to Claim 6, characterized in that the means of scanning addresses (30) are programmable means, the number of addresses scanned being able to be programmed and reprogrammed in real time.

9. Device according to Claim 8, characterized in that the means (30) of scanning addresses and their priority levels are retriggered by an interrupt signal IRQ.

10. Interface according to Claim 6, characterized in that the means of scanning (30) can be programmed to scan the addresses of highest priority depending on their predetermined address values or depending on determined sequences of succession of these maximum priority addresses, the values of these addresses being able to be independently reprogrammed in real time, these means being retriggered by an interrupt signal IRQ.

11. Interface according to Claim 10, characterized in that the lines of the bus are electrical transmission lines.

12. Interface according to Claim 10, characterized in that the lines of the bus are optical lines connected to optoelectronic means.

**FIG. 1**

FIG. 2a

VERS BUS B
(FIG. 2b)

FIG. 2b

FIG. 3a

OSCILLATEUR 90

$T_0$ POUR ADRESSE 1   $T_0$ POUR ADRESSE 2   BALAYAGE

① $t_t$

LIGNES DU BUS

② $U_1$   1   0   1   0

③ $U_2$   0   1   1   0

④ $U_3$   0   0   0   1

⑤ $U_4$   0   0   0   0

$t_m$

⑥ NIVEAU ADRESSE AUTORISE POUR UN TRANSFERT

BINAIRE   0001   0010   0011   0100
DECIMAL   1   2   3   4

FIG. 3b

FIG. 5

**FIG. 4**

VALIDITE SUR LE BUS D'UNE ADRESSE BALAYEE PAR MOYENS 30

$t_t$    $t_m$

TLOAD

$t_1$   $t_1$

$T_0$ POUR ADRESSE EN COURS

$T_0$ POUR ADRESSE SUIVANTE

$\Delta t$

TDAV

$\Delta t$

EGALITE NIVEAUX D'ADRESSES

DONNEES SUR BUS

$+t_3$   $t_4$

LDAV

$t_5$   $t_8$

RDAV

$t_6$   $t_7$

TDACC

EGALITE ADRESSE DE DESTINATION

DEMARRAGE ET GESTION D'UN TRANSFERT

CLOTURE D'UN TRANSFERT

FIG. 6

RECEPTION

$\overline{ETR}$

RDAV

150

RDY

58

152

151

RDACC

$\overline{RAZ}$

$\overline{Q}$

Q

**FIG. 7b**

EMISSION

TDACC

142

141

$\overline{RAZ}$

143

TDAV

$\overline{Q}$

140

$\overline{TLOAD}$

47

TLOAD

**FIG. 7a**

$\overline{RAZ}$

TDACC

181

$\overline{Q}$

TDAV

EMISSION

180

TLOAD

RDY

183

184

Q

RDAV

RECEPTION

**FIG. 9**

FIG. 8